# EUROPEAN PATENT SPECIFICATION

(11) **EP 1 786 170 B1**
(45) Date of publication and mention of the grant of the patent: **14.03.2012**
(21) Application number: 06121171.0
(22) Date of filing: 25.09.2006
(51) Int. Cl.: H04L 29/06, H04W 28/06

(54) **Header compression in voice packets**
Paketkopfkomprimierung in Sprachpaketen
Compression des en-têtes en paquets vocaux

(30) Priority: 23.09.2005 KR 20050088815; 09.06.2006 KR 20060052229
(43) Date of publication of application: 16.05.2007
(73) Proprietor: Samsung Electronics Co., Ltd., Suwon-si, Gyeonggi-do (KR)
(72) Inventor: Kim, Soeng-Hun, Yeongtong-gu, Suwon-si, Gyeonggi-do (KR); Van Lieshout, Gert Jan, Staines, Middlesex TW18 4QE (GB); Van der Velde, Himke, Staines, Middlesex TW18 4QE (GB)
(74) Representative: Grünecker, Kinkeldey, Stockmair & Schwanhäusser

(56) References cited:
- WO-A-02/25442
- BORMANN C ET AL: "RObust Header Compression (ROHC): Framework and four profiles: RTP, UDP, ESP, and uncompressed" IETF STANDARD, INTERNET ENGINEERING TASK FORCE, IETF, CH, July 2001 (2001-07), XP015008878 ISSN: 0000-0003
- SAMSUNG: "UDP checksum field handling for VoIMS - 3GPP TSG-RAN2 Meeting #48", 3GPP TSG-RAN2 MEETING #48, XX, XX, 29 August 2005 (2005-08-29), pages 1-4, XP007901917,

## Description

The present invention relates to a mobile communication system inter-working with the Internet. More particularly, the present invention relates to a method and an apparatus for effectively processing a User Datagram Protocol (UDP) checksum field of a UDP transmitted through a wireless channel.

Mobile communication systems have developed from an initial stage of mainly providing a voice communication service into current wireless data packet communication systems of high speed and high quality for providing data service and multimedia service. Especially, the Universal Mobile Telecommunication Service (UMTS) system is a 3rd generation (3G) mobile communication system, which is based on General Packet Radio Services (GPRS) and Global System for Mobile communications (GSM), a European mobile communication system, and uses Wideband Code Division Multiple Access (WCDMA). The UMTS system provides a consistent service by which users of mobile phones or computers can transmit packet-based text, or digitalized voice, video or multimedia data at a high speed above 2 Mbps regardless of the location of the users in the world. The UMTS system employs a packet exchange type access scheme using a packet protocol such as an Internet Protocol (IP) and can access any terminal within a network at any time.

The 3rd Generation Partnership Project (3GPP) for standardization of the UMTS communication system is now discussing a scheme for supporting Voice over Internet Protocol (VoIP) communication. The VoIP refers to a communication scheme in which voice data generated by a voice coder are converted into Internet Protocol (IP)/User Data Protocol (UDP)/Real-time Transport Protocol (RTP) packets, which are then transmitted. By the VoIP, the UMTS communication system provides voice communication service through a packet network.

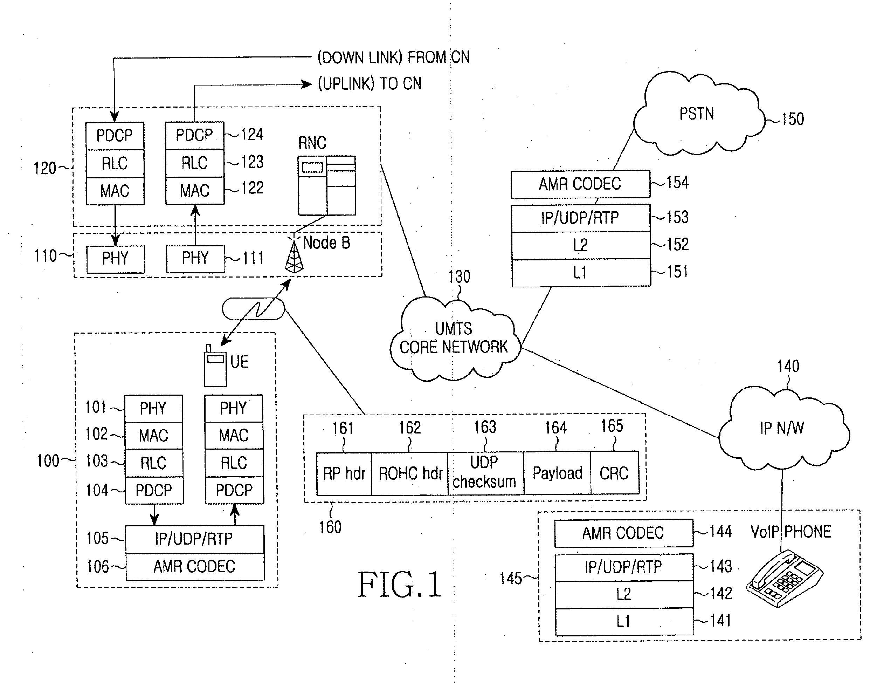

FIG. 1 illustrates a schematic layer structure for performing VolP communication in a typical mobile communication system.

Referring to FIG. 1, a User Equipment (UE) 100 includes a voice codec 106 for converting human voice to voice data, such as an Adaptive Multi-Rate (AMR), an IP/UDP/RTP layer 105 for converting the voice data from the codec 106 into VoIP packets by adding an IP header, UDP header, and RTP header (IP/UDP/RTP header) according to the IP/UDP/RTP to the voice data, a Packet Data Convergence Protocol (PDCP) 104 for compressing the header of the VoIP packet, a Radio Link Control (RLC) layer 103 for converting the VoIP packet to a wireless data frame proper for transmission of the VoIP packet through a wireless channel, a Medium Access Control (MAC) layer 102 for transmitting the wireless data frame through a wireless channel, and a physical (PHY) channel 101.

In general, the RLC layer 103 can be classified into an Unacknowledged Mode (UM), an Acknowledged Mode (AM), and a Transparent Mode (TM) according to an operation type of the RLC layer 103. The VoIP can be processed within the RLC UM.

The RLC UM entity of the transmitter side divides, concatenates, or pads RLC Service Data Units (RLC SDUs) transmitted from the higher layer, thereby resizing the RLC SDUs into a size proper for transmission through a wireless channel, and inserts information about the division/concatenation/padding and a serial number into the RLC SDUs, thereby generating RLC Protocol Data Units (RLC PDUs). The RLC PDUs are transmitted to a lower layer. The RLC UM entity of the receiver side reconstructs the RLC SDU by analyzing the serial number and the division/concatenation/padding information of the RLC PDU transmitted from a lower layer and then transmits the reconstructed RLC SDU to a higher layer. The RLC TM entity of the receiver side either transmits the RLC SDU from a higher layer as it is to a lower layer or transmits the RLC PDU from the lower layer as it is to the higher layer.

The MAC layer 102 interconnects the RLC layer 103 and the PHY layer 101 and inserts a MAC header into the RLC PDU. The data transferred from the MAC layer 102 to the PHY layer 101 are called a "Transport Block (TB)". The PHY layer 101 encodes and modulates the TB and receives/transmits the TB through a wireless channel. Further, the PHY channel 101 inserts a Cyclic Redundancy Check (CRC) code into the TB and then transmits the TB in order to correct errors in the wireless channel, and checks the CRC code of the received TB to determine if the received TB has an error.

As described above, the voice data generated in the codec 106 of the UE 100 are reconstructed into VoIP packets after passing through the IP/UDP/RTP layer 105. A header of the VoIP packet is compressed in the PDCP layer 104, the VoIP packet is reconstructed into an RLC PDU in the RLC layer 103, the RLC PDU is reconstructed into a TB having a size proper for wireless channel transmission in the MAC and PHY layers 101 and 101, and the TB is channel-coded and then transmitted through a wireless channel. The data received through a wireless channel is channel-decoded in the PHY layer 111 of the node B 110 and is then transmitted to the Radio Network Controller (RNC) 120.

The RNC 120 includes a MAC layer 122, an RLC layer 123, and a PDCP layer 124 similar to the UE 100. Therefore, data received by the RNC 120 are converted to an original VoIP packet by the layers 122, 123, and 124, which is then transmitted to a Core Network (CN) 130. The VoIP packet is transmitted to a counterpart communicator through an IP network 140 or a Public Switched Telephone Network (PSTN) 150. The VolP packet is encoded into voice data while passing through L1 layer 151, L2 layer 152, IP/UDP/RTP layer 153, and an AMR codec 154, and the converted voice data are then transmitted to the PSTN 150. In a VoIP phone 145 connected to the IP network 140, the VoIP packet is processed by L1 layer 141, L2 layer 142, IP/UDP/RTP layer 143, and an AMR codec 144, so that the voice data are decompressed. A downlink transmission of the voice data from a PSTN phone (not shown) and the VoIP phone 145 to the UE 100 is progressed in an order reverse to the process described above.

Hereinafter, a structure of a data frame 160 transmitted between the UE 100 and the node B 110 will be described in detail.

Main elements of the wireless channel data frame 160 include a Radio Protocol (RP) header 161, a Robust Header Compression (ROHC) header 162, a UDP checksum 163, a payload 164, and a CRC code 165 inserted by the PHY layer 101

The RP header 161 is a header inserted in the PDCP/RLC/MAC layer 104, 103, 102. In the VoIP communication, since it is often that the PDCP header and the MAC header are not used, the RP header 161 usually includes only the RLC header of 2 - 3 bytes. From among the IP/UDP/RTP header, the UDP header includes a field named "UDP checksum" 163, which cannot be compressed and is located after the ROHC header 162. The UDP checksum 163 is used to detect an error of the IP/UDP/RTP header and has a size of 2 bytes.

The payload 164 corresponds to voice data generated in the AMR codec 106 and includes voice data of 32 bytes or 9 bytes generated by the AMR codec 106. The CRC code 165 is inserted in the PHY layer 101 and corresponds to a CRC operation value for the entire wireless channel data frame. The size of the CRC code is defined for each call, and 12 bits or 16 bits is usually used for the size. The physical layer 111 of the receiver side detects an error in a wireless channel based on the CRC code 165.

As described above, the conventional wireless channel data frame 160 doubly applies two error detection methods, namely the UDP checksum 163 and the CRC 165, in order to detect an error in one VolP packet in a wireless channel. Such a double application causes an overhead in the wireless channel.

Accordingly, there is a need for an improved method and apparatus for transmitting and receiving VoIP packets, and detecting an error in the VoIP packet without an overhead in a wireless channel.

WO 02/25442 A1 refers to a transport protocol checksum recalculation. When transmitting data in a data stream from a sender to a receiver using a data transmitting protocol, packets are received at the receiver and a checksum of each received packet is calculated according to a scheme for calculating checksum specific for the protocol used, wherein the calculated checksum is inserted in a header of the packet. A packet header of a UDP/IP protocol has several well-defined IP fields and several well-defined UDP fields, such as a source port number field, a destination port number field, a UDP length field, and a UDP checksum field. The UDP transport protocol implements checksumming, the header checksum filed, and prohibits data that have been damaged when transported. Not only the damaged bit/byte is discarded, but a whole packet. Preferably, the transmitted packets are treated with header compression, which is known per se, in order to reduce the size of the packets. A reduced data size and reduced data processing is achieved, since much of the information comprised in the headers of the packets, including checksum, no longer needs to be transmitted, thus enhancing the perceived quality of the media stream for many applications. With the header compression technique, a full packet header is only sent at the beginning of a session, or when the receiver finds it necessary. Instead, a connection number is sent, indicating to the receiver which session a particular packet belongs to. Also, header fields that change for each packet in an unpredictable way, such as checksums, are sent for each packet. From this information, the receiver can deduce the original packet and its full header and deliver it to the UDP/IP protocol layer. If the checksum transmitted with the packet, for example from a mobile station, does not correspond to the checksum calculated at the received end, for example at a radio base station, i.e. an error has occurred during the transfer, the checksum is recalculated in a network node and/or end node according to a conventional algorithm for calculating a checksum for that particular protocol in order to obtain a value of the checksum, which is then inserted in the header. Actually, when checksum recalculation is used, it is possible to further enhance the header compression algorithm by excluding transmission of the checksum. This is an additional advantage, since checksum generation is a large portion of the procession required for parsing message data over a network.

SAMSUNG: "UDP checksum field handling for VolMS", Tdoc R-051849, 3GPP TSG-RAN2 Meeting #48, 29 August 2005, discloses a method wherein the original UDP checksum value is swapped with a predefined pseudo UDP checksum value. Then a header compressor calculates a ROHC CRC with this pseudo UDP checksum value. Since the pseudo UDP checksum value is known to both sides, it is not transmitted over the air link.

An aspect of exemplary embodiments of the present invention is to address at least the above problems and/or disadvantages and to provide at least the advantages described below.

Accordingly, it is the object of the present invention to provide an improved apparatus and improved method for efficiently processing voice packets in a mobile communication system supporting voice service through a packet network inter-working with the internet.

This object is solved by the subject matter of the independent claims.

Preferred embodiments are defined by the dependent claims.

It is another aspect of the present invention to provide an apparatus and a method for efficiently processing a user data protocol (UDP) checksum field of a UDP in a mobile communication system inter-working with the internet.

An exemplary embodiment of the present invention provides an apparatus and a method for efficiently using transmission resources by omitting transmission of a UDP checksum field of a VolP packet in a wireless channel providing an error detection function.

An exemplary embodiment of the present invention provides an apparatus and a method for deleting and decompressing a UDP checksum field of a VolP packet exchanged between an PDCP layer and an RLC layer.

In order to accomplish an aspect of exemplary embodiments of the present invention, there is provided a method for transmitting a voice packet through a radio link in a mobile communication system which provides a voice service through a packet network inter-working with the Internet, in which a voice packet based on an Internet protocol (Voice over Internet Protocol (VoIP) packet) is received, the voice packet having headers including a User Datagram Protocol (UDP) checksum; the voice packet is verified by using the UDP checksum, to determine if the voice packet has an error; the headers are compress, thereby constructing a header-compressed packet including the UDP checksum and a Cyclic Redundancy Check (CRC) code calculated for the other header fields except for the UDP checksum from among the headers, when the voice packet has no error; the UDP checksum is deleted from the header-compressed packet, thereby constructing a header-compressed packet from which the UDP checksum has been deleted; and the header-compressed packet is transmitted without the UDP checksum through a wireless channel.

In accordance with another aspect of exemplary embodiments of the present invention, there is provided a method for receiving a voice packet through a radio link in a mobile communication system which provides a voice service through a packet network inter-working with the Internet, in which a header-compressed packet having compressed headers through the radio link is received, wherein the compressed headers do not include a UDP checksum; the headers of the header-compressed packet are decompressed except for the UDP checksum, thereby constructing a header-decompressed packet which does not include the UDP checksum; the decompressed headers of the header-decompressed packet are verifyed by using a CRC code calculated for other header fields except for the UDP checksum from among the compressed headers; the UDP checksum of the header-decompressed packet is calculated when the decompressed headers have no error; and the UDP checksum is inserted into the decompressed headers of the header-decompressed packet, thereby decompressing a voice packet based on an Internet protocol, wherein the voice packet includes a Voice over Internet Protocol (VoIP) packet.

In accordance with another aspect of exemplary embodiments of the present invention, there is provided a method for transmitting a voice packet through a radio link in a mobile communication system which provides a voice service through a packet network inter-working with the Internet, in which a voice packet based on an Internet protocol is received, wherein the voice packet has headers including a User Datagram Protocol (UDP) checksum; the voice packet is verified by using the UDP checksum, to determine if the voice packet has an error; the headers are compressed, thereby constructing a header-compressed packet including the UDP checksum and a Cyclic Redundancy Check (CRC) code calculated for the headers including the UDP checksum, when the voice packet has no error; the UDP checksum is deleted from the header-compressed packet, thereby constructing a header-compressed packet from which the UDP checksum has been deleted; and the header-compressed packet is transmitted without the UDP checksum through a wireless channel.

In accordance with another aspect of exemplary embodiments of the present invention, there is provided a method for receiving a voice packet through a radio link in a mobile communication system which provides a voice service through a packet network inter-working with the Internet, in which a header-compressed packet having compressed headers is received through the radio link, wherein the compressed headers do not include a UDP checksum; the headers of the header-compressed packet are decompressed except for the UDP checksum, thereby constructing a header-decompressed packet which does not include the UDP checksum; the UDP checksum is calculated for the header-decompressed packet; the UDP checksum is inserted into the decompressed headers of the header-decompressed packet, thereby constructing a header-decompressed packet including the UDP checksum; the decompressed headers including the UDP checksum are verifyed by using a CRC code calculated for all the header fields including the UDP checksum; and the header-decompressed packet including the UDP checksum is output as a voice packet based on an Internet protocol, when the decompressed headers do not have an error.

In accordance with another aspect of exemplary embodiments of the present invention, there is provided a method for transmitting a voice packet in a mobile communication system which provides a voice service through an Internet network, in which a voice packet based on an Internet protocol is received, wherein the voice packet has headers including a User Datagram Protocol (UDP) checksum; a determination is made as to whether the UDP checksum of the voice packet has been activated; the voice packet is compressed to construct a header-compressed packet which does not include the UDP checksum, and the header-compressed packet is transmitted without the UDP checksum to a receiver side, when the UDP checksum has not been activated; the UDP checksum of the voice packet is swapped by a predetermined dummy UDP checksum and the voice packet including the dummy UDP checksum is compressed, thereby constructing a header-compressed packet, when the UDP checksum has been activated; and the dummy UDP checksum is deleted from the header-compressed packet and then the header-compressed packet is transmitted without the dummy UDP checksum to the receiver side.

In accordance with another aspect of exemplary embodiments of the present invention, there is provided a method for receiving a voice packet in a mobile communication system which provides a voice service through an Internet network, in which a voice packet based on an Internet protocol is received, wherein the voice packet has uncompressed headers including a User Datagram Protocol (UDP) checksum; a determination is made as to whether the UDP checksum of the voice packet has been activated; headers of header-compressed packets related to the voice packet are decompressed, which are received after the voice packet, when the UDP checksum has not been activated; a predetermined dummy UDP checksum is inserted into each of the header-compressed packets related to the voice packet, which do not include the UDP checksum and are received after the voice packet, when the UDP checksum has been activated; and a header-decompressed packet is constructed by decompressing the headers of the packet including the dummy UDP checksum, the UDP checksum for the header-decompressed packet is calculated, and the UDP checksum of the header-decompressed packet is swapped by the calculated UDP checksum.

The above object and other aspects, features and advantages of certain exemplary embodiments of the present invention will be more apparent from the following detailed description taken in conjunction with the accompanying drawings, in which:
FIG. 1 illustrates a schematic layer structure for performing VoIP communication in a typical mobile communication system;
FIG. 2 illustrates structures of VoIP packets before and after headers are compressed, respectively;
FIG. 3 is a block diagram of an apparatus for transmitting and receiving a VoIP packet according to an exemplary embodiment of the present invention;
FIG. 4 is a view for illustrating a process for decompressing the headers and inserting a UDP checksum according to an exemplary embodiment of the present invention;
FIG. 5 is a block diagram of a UE and an RNC according to an exemplary embodiment of the present invention;
FIG. 6 is a flowchart of an operation of the transmitter-side according to an exemplary embodiment of the present invention;
FIG. 7 is a flowchart of an operation of the receiver side according to an exemplary embodiment of the present invention;
FIG. 8 is a flowchart of an operation of the transmitter side according to an exemplary embodiment of the present invention;
FIG. 9 is a flowchart of an operation of the receiver side according to an exemplary embodiment of the present invention;
FIG. 10 is a view for illustrating an operation and apparatus for transmitting and receiving a VoIP packet according to an exemplary embodiment of the present invention;
FIG. 11 is a block diagram illustrating a UE and an RNC according to an exemplary embodiment of the present invention;
FIG. 12 is a flowchart of a UDP checksum filter/swap operation of the transmitter-side according to an exemplary embodiment of the present invention;
FIG. 13 is a flowchart of a UDP checksum deletion operation of the transmitter side according to an exemplary embodiment of the present invention;
FIG. 14 is a flowchart of a dummy UDP checksum insertion operation of the receiver side according to an exemplary embodiment of the present invention;
FIG. 15 is a flowchart of a dummy UDP checksum calculation operation of the receiver side according to an exemplary embodiment of the present invention;
FIG. 16 is a block diagram illustrating a UE and an RNC according to an exemplary embodiment of the present invention;
FIG. 17 is a flowchart of a UDP checksum filter/swap operation of the transmitter side according to an exemplary embodiment of the present invention; and
FIG. 18 is a flowchart of a UDP checksum decompression operation of the receiver side according to an exemplary embodiment of the present invention.

Throughout the drawings, the same drawing reference numerals will be understood to refer to the same elements, features and structures.

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

According to the core idea of the exemplary embodiments of the present invention described below, a UDP checksum is excluded from a VolP packet transmitted through a wireless channel supporting an error correction function and is then newly calculated at the receiver side of the wireless channel. This is possible because most of the error in the wireless channel can be detected by the CRC of the physical layer. The UDP checksum is used for operation of CRC generated during header compression, so the deletion and re-calculation of the UDP checksum relate to the header compression. Hereinafter, the operation of header compression will be discussed first.

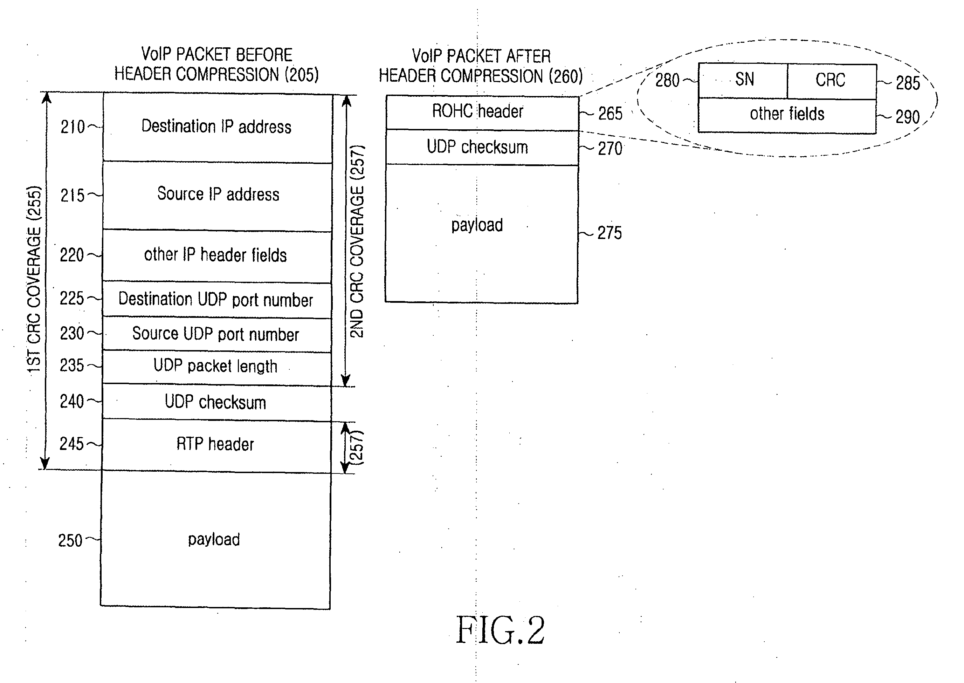

FIG. 2 illustrates structures of VoIP packets before and after headers are compressed, respectively. As shown, the VoIP packet 205 before the headers are compressed includes IP headers 210, 215, and 220; UDP headers 225, 230, 235, and 240; and RTP headers 245 and 250.

The IP headers include a destination IP address 210, a source IP address 215, and other IP header field 220. The destination IP address 210 corresponds to an IP address of the destination of the VoIP packet 250, and the source IP address 215 corresponds to an IP address of a node in which the VoIP packet 250 has been generated. In Internet Protocol version 6 (IPv6), the destination IP address 210 and the source IP address 215 has a size of 16 bytes. The other IP header field 220 includes various types of information, such as a protocol version, a protocol number of a higher layer, and an IP flow identifier (ID). From among the information in the other IP header field 220, the protocol number of the higher layer (not shown) is information indicating the type of protocol used in a transport layer which is a higher layer of the IP layer. In the VoIP, the UDP corresponds to the protocol number of the higher layer.

The UDP headers include a destination UDP port number 225, a source UDP port number 230, a UDP packet length 235, and a UDP checksum 240. The destination UDP port number 225 is a logical identifier allocated to a specific application (or specific higher layer) within one node, has a size of 2 bytes, and indicates a specific higher layer to which the VoIP packet 205 must be transferred. The source UDP port number 230 indicates a specific higher layer in which the VoIP packet 205 has been generated. The UDP packet length 235 indicates the size of the packet including the UDP headers 225 to 240. The UDP checksum 240 is a value obtained as a result of a checksum operation for detecting an error for pseudo IP headers, UDP headers 225 to 240, an RTP header 245, and a payload 250, and has a size of 2 bytes. The pseudo IP headers refer to the destination IP address 210, the source IP address 215, and a higher layer protocol number from among the IP headers 210 to 220.

The RTP header 245 includes information necessary for real-time traffic reproduction, such as a serial number and a time stamp, and has a size of 8 bytes. The payload 250 includes the voice data generated by the codec.

Next, fields of a header-compressed VoIP packet 260 after the headers are compressed will be described.

The header-compressed VoIP packet 260 includes a ROHC header 265, a UDP checksum 270, and a payload 275. The ROHC header 265 has a structure and size which can be changed according to the operation status of the header compression. In general, however, the ROHC header 265 includes a Serial Number (SN) 280 and a CRC code 285. The SN 280 corresponds to several last bits of the serial number included in the RTP header 245. The CRC code 285 is a value obtained from the IPIUDP/RTP header 210 to 245 before the compression and is used in determining if the headers have been successfully decompressed. The ROHC header 265 may include other fields 290 as well as the CRC code 285 and the SN 280 according to a used header compression protocol. However, description of the other fields 290 will be omitted for clarity and conciseness.

According to the header compression protocol, "values of unchanged header fields (for example, IP addresses and UDP port numbers)" are included in a corresponding context and are not actually transmitted, and "values of occasionally changing header fields" are transmitted when the "occasionally changing header fields" change. Also, in the case of "values of regularly changing fields" (for example, RTP serial number), information by which it is possible to estimate the change in the "regularly changing fields" is transmitted. Further, according to the header compression protocol, "values of irregularly changing fields" are always transmitted. The UDP checksum 270 belongs to the "irregularly changing fields" and is always transmitted in a state in which it is not compressed as shown in FIG. 2.

Upon receiving the header-compressed VoIP packet 260, a header decompressor which may be included in the PDCP layer of the receiver side decompresses the original VoIP packet by using the SN 280 and the other fields 290, and then verifies the header of the decompressed VoIP packet through a CRC operation using the CRC code 285. When the CRC operation has failed, it implies failure in normal decompression of the header and the decompressed VoIP packet is discarded.

Meanwhile, because a typical CRC coverage 255 used in calculation of the CRC code 285 includes the UDP checksum 240, the header decompressor must be aware of the UDP checksum 240 in order to verify the header of the decompressed VoIP packet. In other words, according to the method in which the UDP checksum is deleted from the transmitted packet by the transmitter side and is then decompressed by the receiver side, VoIP packets without an error may be discarded due to failure in the CRC in the verifying the decompressed headers.

In order to solve the above-mentioned problem, a CRC coverage 257 which does not include the UDP checksum 240 is used in the CRC operation during the header compression process and the header decompression process. In calculating the CRC code 285 during the header compression process, since the CRC coverage 257 does not include the UDP checksum 240, the transmitter side can easily delete the UDP checksum 240 from the transmitted VolP packet and the receiver side can decompresses the exact UDP checksum 240. In other words, the CRC code 285 of the header-compressed VoIP packet corresponds to a value obtained through calculation of the CRC coverage 257 which is another part of the original IP/UDP/RTP packet, except for the UDP checksum 240.

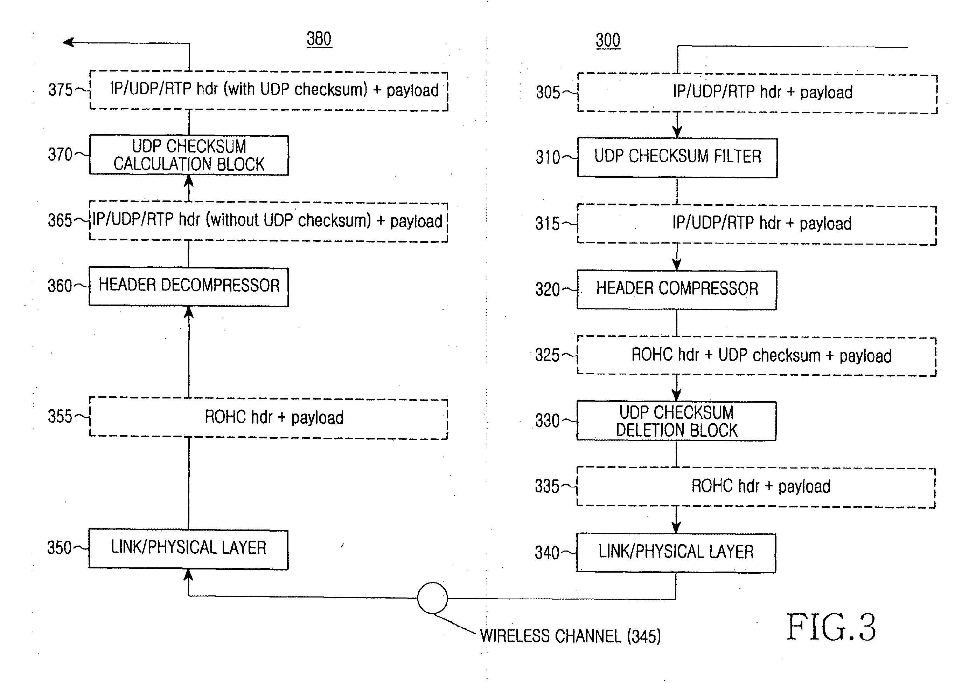

FIG. 3 is a block diagram of an apparatus for transmitting and receiving a VoIP packet according to an exemplary embodiment of the present invention. In FIG. 3, the transmitter side 300 and the receiver side 380 are separately illustrated.

Referring to FIG. 3, the transmitter side 300 includes a UDP checksum filter 310, a header compressor 320, a UDP checksum deletion block 330, and a link and physical layer (hereinafter link/physical layer) 340. When a VoIP packet 305 including voice data and an IP/UDP/RTP header is first received from another node or a higher layer, the UDP checksum filter 310 performs a UDP checksum checking for the VoIP packet, thereby determining if the VoIP packet has an error. The UDP checksum filter 310 discards erroneous VoIP packets and transmits VoIP packets 315 without an error to the header compressor 320.

The header compressor 320 compresses the header of the VoIP packet 315, thereby generating the header-compressed packet 325. The header compressor 320 does not take the UDP checksum into account in the operation of the CRC to be included in the compressed header. That is, as shown in FIG. 2, the CRC coverage 255 of the conventional header compression protocol includes the whole IP/UDP/RTP header, while the CRC coverage 255 according to an exemplary embodiment of the present invention includes the part of the IP/UDP/RTP header without the UDP checksum.

The header-compressed packet 325 is input to the UDP checksum deletion block 330, and the UDP checksum deletion block 330 deletes the UDP checksum from the header-compressed packet 325 and transmits the header-compressed packet 335 without the UDP checksum to the link/physical layer 340. The link/physical layer 340 loads the header-compressed packet 335 without the UDP checksum on a wireless data frame and transmits the wireless data frame carrying the header-compressed packet 335 without the UDP checksum to the receiver side 380 through a wireless channel 345.

The receiver side 380 includes a UDP checksum calculation block 370, a header decompressor 360, and a link/physical layer 350 including RLC/MAC/PHY layers. Upon receiving the wireless data frame through a wireless channel, the link/physical layer 350 properly processes the wireless data frame according to a wireless protocol, thereby reconstructing a "header-compressed packet 355 without the UDP checksum". The header decompressor 360 receives the "header-compressed packet 355 without the UDP checksum" and decompresses the compressed header, thereby reconstructing a "VoIP packet 365 without the UDP checksum". The header decompressor 360 decompresses the other part of the headers except for the UDP checksum, differently from the conventional header decompressor which decompresses all the headers including the UDP checksum.

The header decompressor 360 verifies the decompressed headers of the "VoIP packet 365 without the UDP checksum". That is, the header decompressor 360 performs a CRC operation for the decompressed headers and compares a CRC code obtained from the CRC operation with a CRC code included in the decompressed header. When the two values coincide with each other, it is considered that the decompressed headers are normal. In contrast, when the two values do coincide with each other, it is determined that the decompression of the headers is failure. The VolP packet, headers of which have failed to be decompressed, is discarded.

The VoIP packet 365 having headers successfully decompressed by the header decompressor 360 is input to the UDP checksum calculation block 370. The UDP checksum calculation block 370 calculates a UDP checksum for a pseudo IP header, a UDP header, and a UDP payload of the VoIP packet 365 according to a predetermined UDP checksum calculation algorithm, and inserts the calculated UDP checksum into the VoIP packet 365, thereby decompressing a complete VoIP packet 375. The decompressed VoIP packet 375 is transmitted to the IP/UDP/RTP layer.

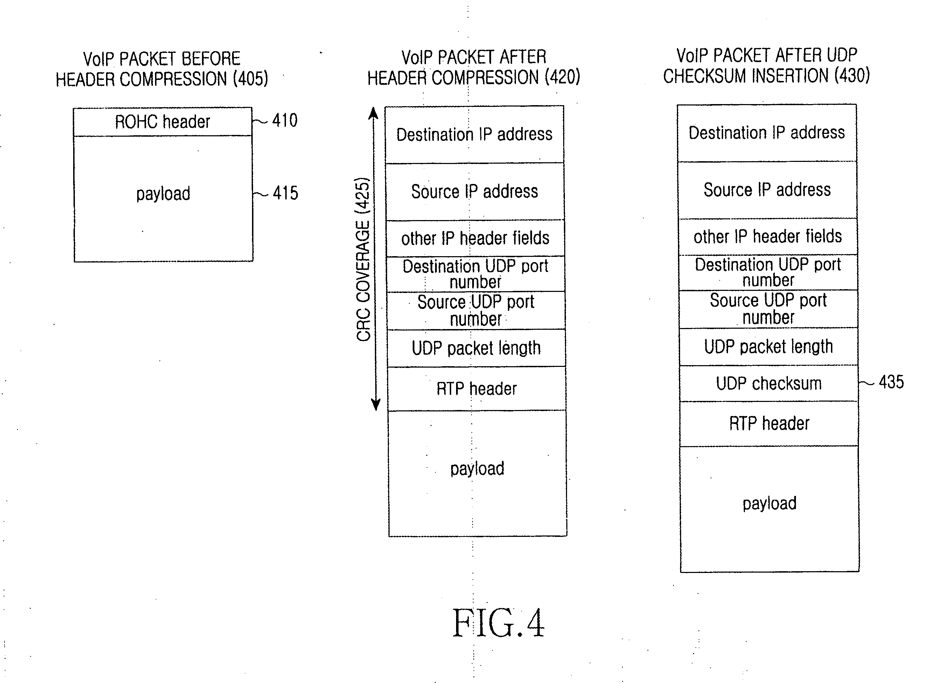

FIG. 4 is a view for illustrating a process for decompressing the headers and inserting the UDP checksum according to an exemplary embodiment of the present invention. Hereinafter, an operation of the receiver side 380 will be described in more detail.

Referring to FIG. 4, the header decompressor 360 receives the header-compressed VoIP packet 405. The header-compressed VoIP packet 405 includes a ROHC header 410 and a payload 415, wherein the ROHC header 410 does not include a UDP checksum. The header decompressor 360 decompresses the other IP/UDP/RTP headers except for the UDP checksum by using the ROHC header 410. The header decompressor 360 verifies the decompressed headers by performing a CRC operation for the decompressed headers. In other words, the header decompressor 360 calculates a CRC code for the CRC coverage 425 including the other IP/UDP/RTP headers except for the UDP checksum and compares the calculated CRC code with a CRC code included in the ROHC header 410. When the CRC codes are the same, the header decompressor determines that the headers have been successfully decompressed.

The UDP checksum calculation block 370 inserts the UDP checksum 435 into the packet 420 having successfully decompressed headers, thereby decompressing the original VoIP packet 430, which is then transmitted to a higher layer. The UDP checksum 435 is calculated according to the same UDP checksum calculation algorithm as that used when the VoIP packet is generated.

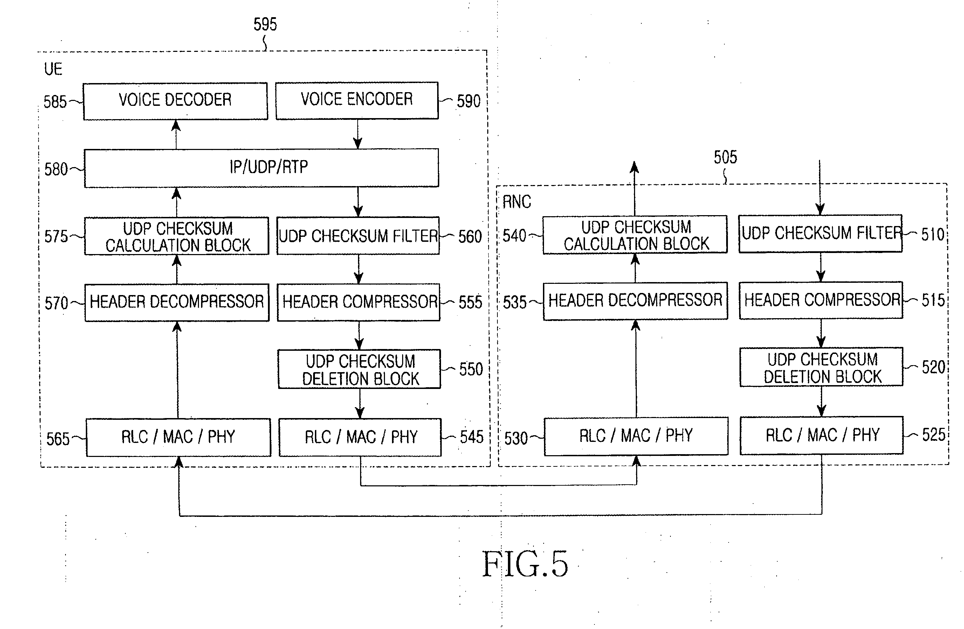

FIG. 5 is a block diagram of a UE and an RNC according to an exemplary embodiment of the present invention.

As shown, the UE 595 and the RNC 505 symmetrically perform transmission and reception operations. Specifically, the UE 595 performs a transmission operation in the uplink direction and a reception operation in the downlink direction and the RNC 505 performs a transmission operation in the downlink direction and a reception operation in the uplink direction.

The transmission operation refers to an operation of receiving IP/UDP/RTP packets from a higher layer, checking a UDP checksum of the received IP/UDP/RTP packets, discarding erroneous packets, compressing the IP/UDP/RTP headers, and deleting the UDP checksum. Further, the reception operation refers to an operation of receiving IP/UDP/RTP packets having compressed headers from a lower layer, decompressing IP/UDP/RTP headers except for the UDP checksum, performing a UDP checksum operation for the decompressed headers and payload, and inserting a resultant value of the UDP checksum operation into a UDP checksum field of the decompressed IP/UDP/RTP headers.

Referring to FIG. 5, each of the UE 595 and the RNC 505 includes a UDP checksum filter 510 or 560, a header compressor 515 or 555, and a UDP checksum deletion block 520 or 550, in order to perform the transmission operation. Further, the UE 595 and the RNC 505 includes a UDP checksum calculation block 540 or 575 and a header decompressor 535 or 570, in order to perform the reception operation.

The UE 595 and the RNC 505 include RLC/MAC/PHY layers 525, 530, 545, and 565 each corresponding to the link/physical layer, in order to perform UMTS transmission and reception. A voice encoder 590 and a voice decoder 585 included in the UE 595 encode voice signals of a user into voice data and decode voice data into voice signals, respectively. For example, the voice encoder 590 and the voice decoder 585 use an AMR codec. The IP/UDP/RTP layer 580 of the UE 595 packetizes the voice data (which are data of a higher layer) into IP/UDP/RTP packets or demultiplexes the IP/UDP/RTP packets and transmits the demultiplexed data to the voice decoder 585 which is a higher layer. The operation of the elements described is the same as that described above.

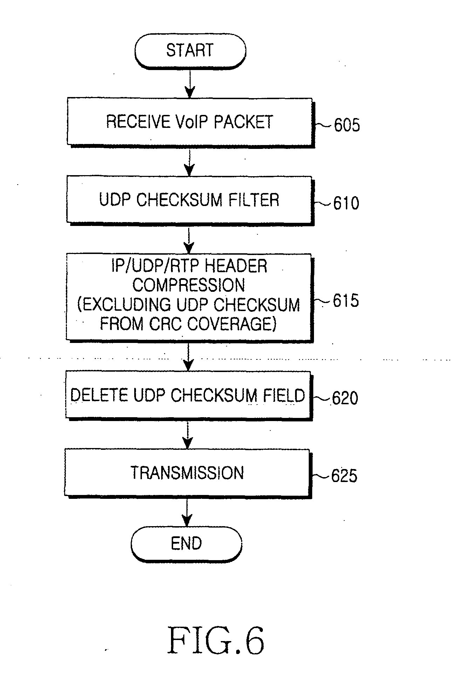

FIG. 6 is a flowchart of an operation of the transmitter-side according to an exemplary embodiment of the present invention.

Referring to FIG. 6, in step 605, the transmitter side receives VoIP packet including the IP/UDP/RTP header and transmits the VoIP packet to the UDP checksum filter. The VoIP packet is generated by a processor located at a front end of the UDP checksum filter. For example, the VoIP packet may be generated by a higher layer such as the IP/UDP/RTP layer in the case of the UE or by another network node in the case of the RNC.

In step 610, the UDP checksum filter checks the UDP checksum of the VoIP packet, thereby determining if the VoIP packet has an error. For example, the UDP checksum filter calculates the UDP checksum for the VoIP packet, and compares the calculated UDP checksum with the UDP checksum included in the VoIP packet. As a result of the comparison, when the two values do not coincide, that is, when the VoIP packet has an error, the VoIP packet is discarded. In contrast, when the calculated UDP checksum coincides with the received UDP checksum, that is, when the VoIP packet does not have an error, the VoIP packet is transmitted to the header compressor.

In step 615, the header compressor generates a header-compressed packet by compressing the IP/UDP/RTP headers of the VoIP packet. The CRC code included in the compressed headers of the header-compressed packet corresponds to a value resulted from a CRC operation for the other header fields except for the UDP checksum of the VoIP packet. The UDP checksum is deleted from the header-compressed packet in step 620, and the header-compressed packet from which the UDP checksum has been deleted is transmitted to the receiver side by the RLC/MAC/PHY layer which is a lower layer in step 625.

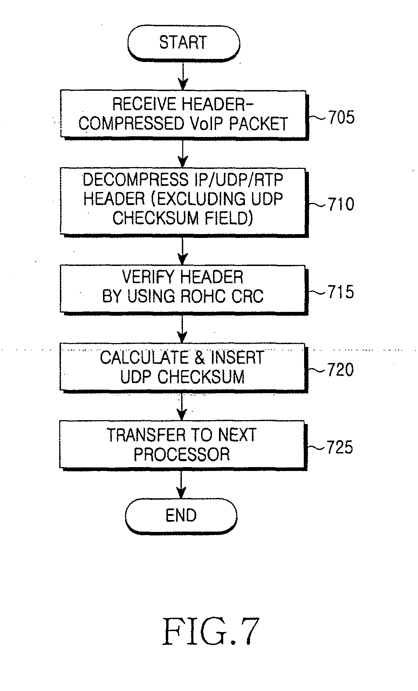

FIG. 7 is a flowchart of an operation of the receiver side according to an exemplary embodiment of the present invention.

Referring to FIG. 7, the receiver side receives the header-compressed packet without the UDP checksum in step 705, and decompresses the headers of the header-compressed packet without the UDP checksum, thereby constructing a header-decompressed packet without the UDP checksum in step 710. Further, in step 715, the receiver side verifies the decompressed headers of the header-decompressed packet without the UDP checksum by using the CRC code included in the compressed headers of the received header-compressed packet. The verification based on the CRC code may be performed by the header decompressor of the receiver side.

As a result of the CRC checking, when the decompressed header is determined to have an error, the header-decompressed packet is discarded. When the decompressed header does not have an error, the UDP checksum calculation block inserts the UDP checksum calculated based on the header-decompressed packet into the header-decompressed packet, thereby decompressing the original VoIP packet in step 720, and transmits the decompressed original VoIP packet to a higher layer in step 725. The higher layer is a process located after the UDP checksum calculation block, which may be either a higher layer such as the IP/UDP/RTP layer in the case of the UE or another network node in the case of the RNC.

According to an exemplary embodiment of the present invention as described above, the header compressor performs a CRC operation for the other header fields except for the UDP checksum. However, according to an exemplary embodiment of the present invention described below, the header compressor performs a CRC operation for all the header fields including the UDP checksum so that it can perform the same operation as the conventional header compression.

That is, after decompressing the headers, the receiver side does not directly perform the header verification but performs the header verification after making a complete packet by decompressing the UDP checksum. Therefore, even when the CRC operation includes the UDP checksum, no error occurs in the process of header verification.

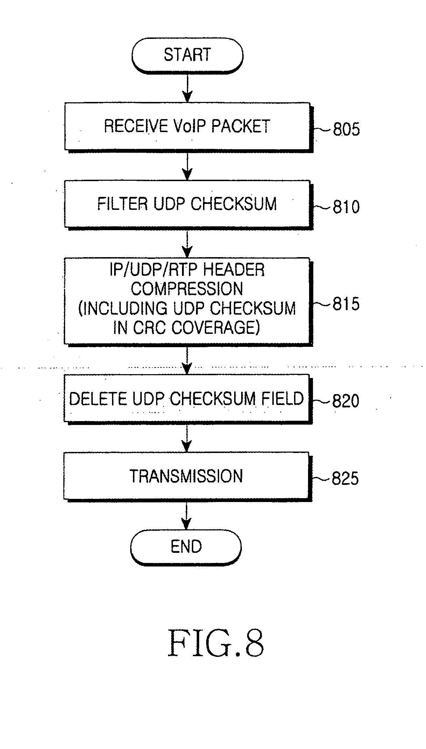

FIG. 8 is a flowchart of an operation of the transmitter side according to an exemplary embodiment of the present invention.

Referring to FIG. 8, the transmitter side receives a VoIP packet including the IP/UDP/RTP header in step 805, and checks the UDP checksum of the VoIP packet, thereby determining if the VoIP packet has an error (step 810). When the VoIP packet has an error, the VoIP packet is discarded. In contrast, when the VoIP packet does not have an error, the VoIP packet is transmitted to the header compressor.

In step 815, the header compressor compresses the IP/UDP/RTP header of the VoIP packet, thereby generating a header-compressed packet. The CRC code included in the compressed header corresponds to a value obtained from a CRC operation for all of the header fields including the UDP checksum field of the VoIP packet. The transmitter side deletes the UDP checksum of the header-compressed packet in step 820, and the header-compressed packet without the UDP checksum is transmitted to the receiver side by the RLC/MAC/PHY layer in step 825.

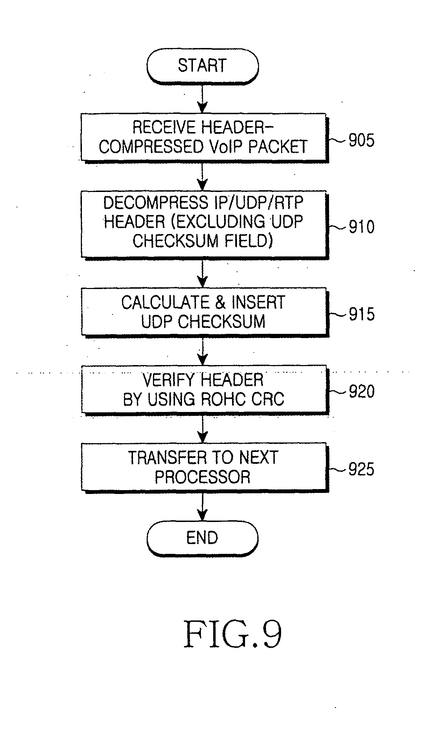

FIG. 9 is a flowchart of an operation of the receiver side according to an exemplary embodiment of the present invention.

Referring to FIG. 9, the receiver side receives the header-compressed packet without the UDP checksum in step 905, and decompresses the headers of the header-compressed packet without the UDP checksum, thereby constructing a header-decompressed packet without the UDP checksum in step 910. In step 915, the receiver side calculates a UDP checksum by using the decompressed headers and the payload of the header-decompressed packet and inserts the calculated UDP checksum in the decompressed headers. In step 920, the receiver side verifies the decompressed headers of the header-decompressed packet including the UDP checksum. The verification of the headers by the CRC code may be performed by a UDP checksum block of the receiver side.

As a result of the CRC checking, when it is determined that the decompressed headers have an error, the header-decompressed packet including the UDP checksum is discarded. When the decompressed headers do not have an error, the header-decompressed packet including the UDP checksum is transmitted to a higher layer in step 925.

In the meantime, the transmitter side may activate or deactivate the UDP checksum field of the UDP header according to necessity. When the UDP checksum field has been activated, the UDP checksum field includes a UDP checksum field value for the UDP header and the IP header. In contrast, when the UDP checksum field has been deactivated, the UDP checksum field is set to have a predetermined value, that is, "0000 0000 0000 0000". When the UDP checksum field has been deactivated, the ROHC algorithm compresses the IP/UDP/RTP header including the UDP checksum field. However, since the UDP checksum field cannot be changed, the header-compressed packet does not include the UDP checksum field. Hereinafter, embodiments for supporting the case in which the UDP checksum field is deactivated will be described.

In the following exemplary embodiments, when the UDP checksum field of the UDP packet has been activated, the transmitter side performs the operation as described above, thereby preventing the UDP checksum from being transmitted through the wireless channel. In contrast, when the UDP checksum field of the UDP packet has not been activated, the transmitter side transmits the VoIP packet as it is to the header compressor, and the header compressor compresses the VoIP packet including the UDP checksum. Further, when the UDP checksum field of the received VoIP packet has been activated, the receiver side performs the operation as described above, thereby decompressing the UDP checksum. In contrast, when the UDP checksum field of the received VoIP packet has not been activated, the receiver side transmits the received VoIP packet as it is to the header decompressor, and the header decompressor decompresses the UDP checksum.

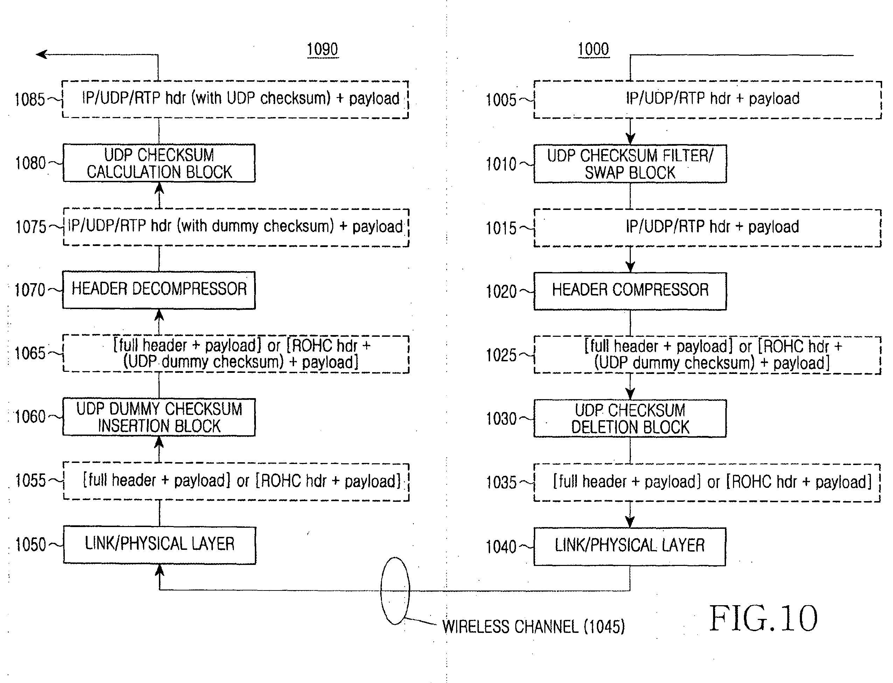

FIG. 10 is a view for illustrating an operation and apparatus for transmitting and receiving a VoIP packet according to an exemplary embodiment of the present invention. In FIG. 10, the transmitter side 1000 and the receiver side 1090 are separately illustrated.

Referring to FIG. 10, the transmitter side 1000 includes a UDP checksum filter/swap block 1010, a header compressor 1020, a UDP checksum deletion block 1030, and a link/physical layer 1040. From among the above devices, the other devices except for the link/physical layer 1040 are set one for each IP flow.

When a VoIP packet 1005 having voice data and IP/UDP/RTP headers for a certain IP flow from another node or a higher layer is first received, the UDP checksum filter/swap block 1010 determines if the UDP checksum field of the VoIP packet 1005 has been activated. When the UDP checksum field of the VoIP packet 1005 is "0000 0000 0000 0000", it implies that the UDP checksum field of the VoIP packet 1005 has not been activated, and the UDP checksum filter/swap block 1010 transfers all VoIP packets including the VoIP packet 1005 and packets received thereafter in relation to the corresponding service to the header compressor without changing the packets at all. In contrast, when the UDP checksum field of the VoIP packet 1005 has a value different from "0000 0000 0000 0000", the UDP checksum filter/swap block 1010 performs the following operations for the VoIP packets received after the VoIP packet 1005.

The UDP checksum filter/swap block 1010 checks the UDP checksum of each VoIP packet in order to determine if the VoIP packet has an error, and discards a VoIP packet having an error.

The UDP checksum filter/swap block 1010 swaps a value of the UDP checksum field of a VoIP packet having no error with a predetermined dummy UDP checksum value and transfers the VoIP having the UDP checksum with the swapped dummy UDP checksum value to the header compressor.

Therefore, according to the activation/deactivation of the UDP checksum, the VoIP packet 1015 transferred to the header compressor may be either a VoIP packet having the UDP checksum with the swapped dummy UDP checksum value or a VoIP packet having a non-activated UDP checksum value "0000 0000 0000 0000".

The header compressor 1020 compresses the IP/UDP/RTP headers of the VoIP packet 1015. That is, the header compressor 1020 constructs and outputs an Initialization & Refresh (IR) packet, which includes uncompressed IP/UDP/RTP headers, that is, full headers, from an initially received VoIP packet, and constructs and outputs header-compressed packets 1025 from VoIP packets received after an initially received VoIP packet.

The IR packet or header-compressed packets 1025 are input to the UDP checksum deletion block 1030.

Upon receiving the IR packet, the UDP checksum deletion block 1030 checks if the UDP checksum field of the IR packet is "0000 0000 0000 0000". When the UDP checksum field of the IR packet is "0000 0000 0000 0000", the VoIP packets received after the IR packet are transmitted as they are to the link/physical layer 1040. In contrast, when the UDP checksum field of the IR packet is not "0000 0000 0000 0000", the UDP checksum fields are deleted from the packets received after the IR packet and the packets are then transmitted to the link/physical layer 1040. Then, the link/physical layer 1040 properly processes the packets 1035 from the UDP checksum deletion block 1030 and then transmits the properly processed packets through the wireless channel 1045.

The receiver side 1090 includes a UDP checksum calculation block 1080, a header decompressor 1070, a dummy UDP checksum insertion block 1060, and a link/physical layer 1050.

In the receiver side 1090, the link/physical layer 1050 receives a wireless data frame through the wireless channel 1045, and properly processes the wireless data frame according to a wireless protocol, thereby reconstructing the wireless data frame into a packet 1055. The packet 1055 may be either an IP packet having an uncompressed header or a header-compressed packet having a compressed header. As described above, the transmitter side 1000 first transmits the IP packet having an uncompressed header and then transmits header-compressed packets having compressed headers, that is, header-compressed packets which do not include the UDP checksum field. Therefore, the receiver side 1090 receives the IP packet having an uncompressed header at first.

When the dummy UDP checksum insertion block 1060 has received the packet having an uncompressed header, the dummy UDP checksum insertion block 1060 checks if the UDP checksum field of the packet has a dummy checksum value, that is, "0000 0000 0000 0000". When the UDP checksum field of the packet has the value, "0000 0000 0000 0000", packets received thereafter are transmitted as they are to the header decompressor 1070.

In contrast, when the UDP checksum field of the packet does not have the value of "0000 0000 0000 0000", the dummy UDP checksum insertion block 1060 inserts a pseudo UDP checksum or dummy checksum into header-compressed packets received thereafter and then transmits the header-inserted packets to the header decompressor 1070.

When the packet 1065 from the dummy UDP checksum insertion block 1060 is a packet having an uncompressed header, the header decompressor 1070 constructs a header decompression context by using the packet having an uncompressed header, and decompresses the following header-compressed packets from the dummy UDP checksum insertion block 1060 by using the header decompression context.

The packet 1075 output from the header decompressor 1070 is input to the UDP checksum calculation block 1080. The UDP checksum calculation block 1080 checks if the UDP checksum field of the first-received packet has the value of "0000 0000 0000 0000". When the UDP checksum field of the first-received packet has the value of "0000 0000 0000 0000", packets received thereafter are transmitted as they are to a higher layer.

In contrast, when the UDP checksum field of the first-received packet does not have the value, "0000 0000 0000 0000", the UDP checksum calculation block 1080 performs UDP checksum operation for the pseudo IP header, UDP header, and payload of the packets received thereafter, decompresses the original VoIP packet 1085 by inserting the calculated UDP checksum into the UDP checksum field, and then transmits the decompressed original VoIP packet 1085 to the higher layer.

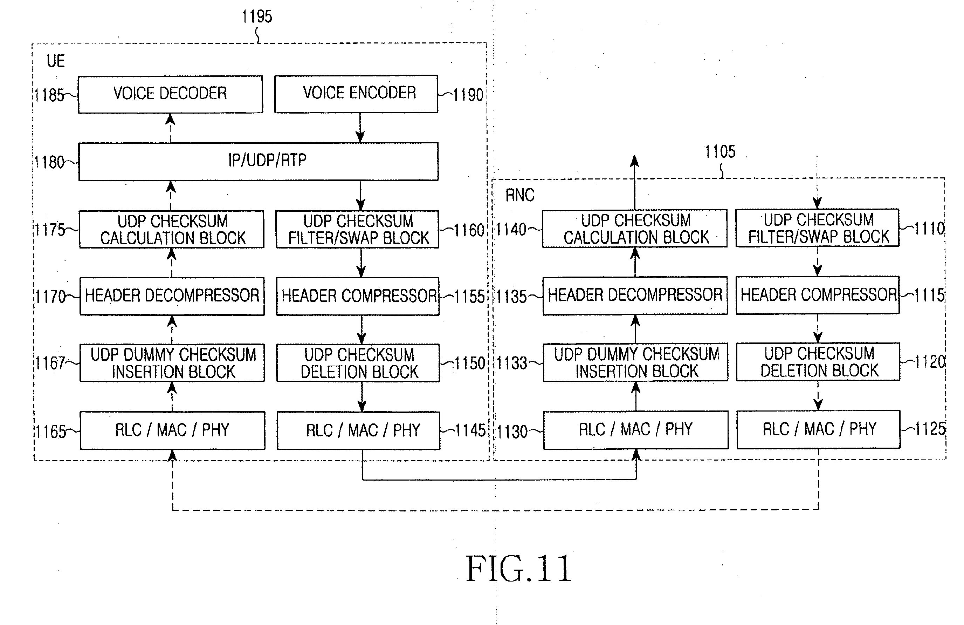

FIG. 11 is a block diagram illustrating a UE and an RNC according to an exemplary embodiment of the present invention.

As shown, the UE 1195 and the RNC 1105 symmetrically perform the transmission operation and the reception operation. For example, the UE 1195 performs a transmission operation in the uplink direction and a reception operation in the downlink direction and the RNC 1105 performs a transmission operation in the downlink direction and a reception operation in the uplink direction.

The transmission operation refers to an operation of receiving IP/UDP/RTP packets from a higher layer, checking a UDP checksum field of the received IP/UDP/RTP packets to determine if the UDP checksum of the packet has been activated and if the packet has an error, and deleting a UDP checksum field of a packet having no error when the UDP checksum has been activated. Further, the reception operation refers to an operation of determining if a UDP checksum of a packet received from a lower layer has been activated, and decompressing a UDP checksum of a packet having an activated UDP checksum.

Referring to FIG. 11, each of the UE 1195 and the RNC 1105 includes a UDP checksum filter/swap block 1110 or 1160, a header compressor 1115 or 1155, and a UDP checksum deletion block 1120 or 1150, in order to perform the transmission operation. Further, each of the UE 1195 and the RNC 1105 includes a UDP checksum calculation block 1140 or 1175, a header decompressor 1135 or 1170, and a dummy UDP checksum insertion block 1133 and 1167, in order to perform the reception operation.

The UE 1195 and the RNC 1105 include RLC/MAC/PHY layers 1125, 1130, 1145, and 1165, in order to perform UMTS transmission and reception. A voice encoder 1190 and a voice decoder 1185 included in the UE 1195 encode voice signals of a user into voice data and decode voice data into voice signals, respectively.

The IP/UDP/RTP layer 1180 of the UE 1195 packetizes data of a higher layer (which are voice data) into IP/UDP/RTP packets or demultiplexes the IP/UDP/RTP packets and transmits the demultiplexed data to the voice decoder 1185 which is a higher layer.

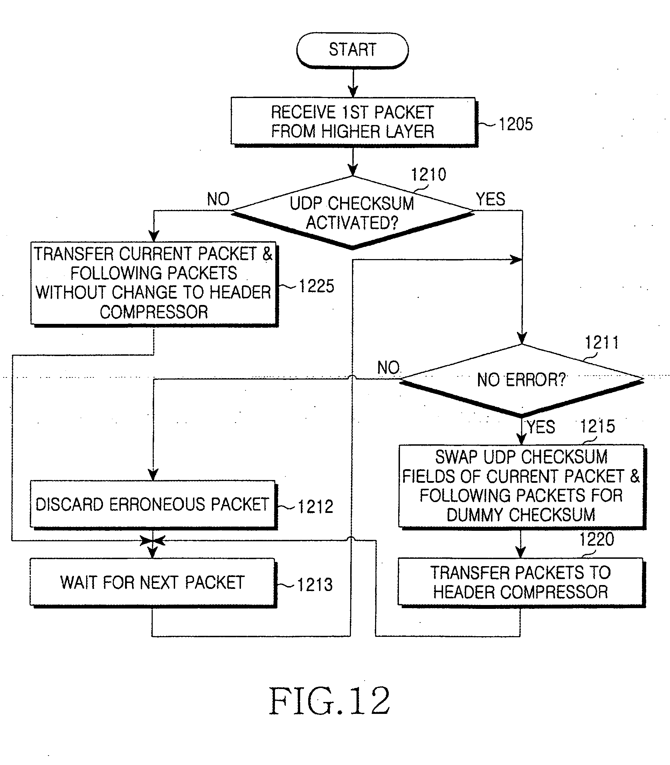

FIG. 12 is a flowchart of a UDP checksum filter/swap operation of the transmitter-side according to an exemplary embodiment of the present invention.

Referring to FIG. 12, after setup of a call, the UDP checksum filter/swap block of the transmitter side receives the first VoIP including the IP/UDP/RTP headers constructed in the higher layer (step 1205). In step 1210, the UDP checksum filter/swap block of the transmitter side checks if the UDP checksum of the VoIP packet has been activated. When the UDP checksum field of the VoIP packet has a value of "0000 0000 0000 0000", it implies that the UDP checksum has not been activated, and step 1225 is then performed. In contrast, when the UDP checksum field of the VoIP packet does not have the value of "0000 0000 0000 0000", it implies that the UDP checksum has been activated, and step 1211 is then performed.

In step 1225, the UE transmits the VoIP packet and packets generated thereafter to the header compressor in an existing state when they are received, and proceeds to step 1213. This is because the UDP checksum activation/deactivation statuses of the packets belonging to the same IP flow of the setup call are always the same. That is, when the UDP checksum of the first packet has been deactivated, the UDP checksums of the packets received thereafter are also deactivated. Since the deactivated UDP checksum is compressed to 0 bytes (that is, it is deleted) by the header compressor, the UDP checksum filter/swap block need not perform a special operation for the deactivated UDP checksum.

In contrast, when the UDP checksum of the first packet has been activated, the UDP checksum filter/swap block checks the UDP checksum of the VoIP packet in order to determine if the VoIP packet has an error (step 1211). Then, the UDP checksum filter/swap block proceeds to step 1212 when the VoIP packet has an error and proceeds to step 1215 when the VoIP packet does not have an error.

In step 1215, the UDP checksum filter/swap block of the transmitter side swaps the UDP checksum fields of the VoIP packet and packets received thereafter for a predetermined dummy checksum. The predetermined dummy checksum may be, for example, "1111 1111 1111 1111". In step 1220, the UDP checksum filter/swap block of the transmitter side transmits the VoIP packets having the swapped dummy checksum in the UDP checksum fields to the header compressor and proceeds to step 1213.

In contrast, in step 1212, the UDP checksum filter/swap block of the transmitter side discards an erroneous packet or packets and proceeds to step 1213 in which the UDP checksum filter/swap block waits for arrival of a next packet. When the next packet is arrived, the UDP checksum filter/swap block proceeds to step 1211 in order to determine if the next packet has an error.

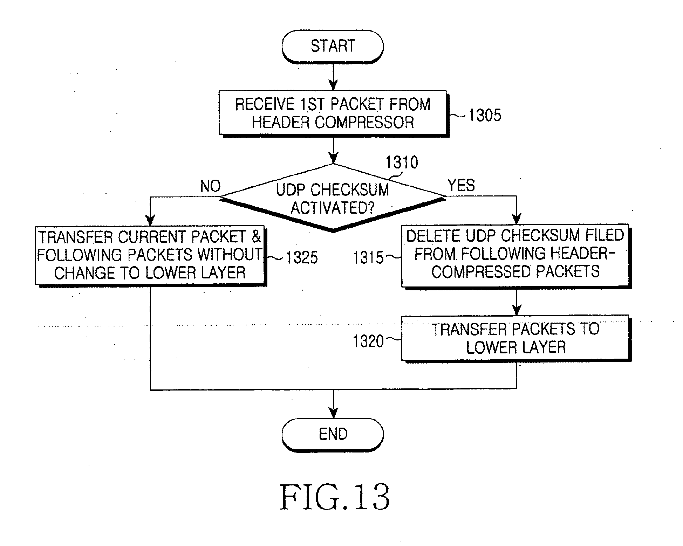

FIG. 13 is a flowchart of a UDP checksum deletion operation of the transmitter side according to an exemplary embodiment of the present invention.

Referring to FIG. 13, after setup of a call, the UDP checksum deletion block of the transmitter side receives the first packet from the header compressor (step 1305). In step 1310, the UDP checksum deletion block of the transmitter side checks if the UDP checksum of the received packet has been activated. When the UDP checksum field of the packet has a value of "0000 0000 0000 0000", it implies that the UDP checksum has not been activated, and step 1325 is then performed. In contrast, when the UDP checksum field of the packet does not have the value of "0000 0000 0000 0000", it implies that the UDP checksum has been activated, and step 1315 is then performed.

In step 1325, the UE transmits the packet and packets arriving thereafter as they are to the lower layer, that is, the link/physical layer. This is because the UDP checksum activation/deactivation statuses of the packets belonging to the same IP flow of the setup call are always the same. That is, when the UDP checksum of the first packet has been deactivated, the UDP checksums of the packets received thereafter are also deactivated. Since the deactivated UDP checksum is compressed to 0 bytes (that is, it is deleted) by the header compressor, the UDP checksum deletion block transmits the packets as they are to the lower layer (the link/physical layer) so that the packets can be transmitted to the receiver side without being subjected to a special operation.

In contrast, when the UDP checksum of the first packet has been activated, the UDP checksum deletion block of the transmitter side deletes the UDP checksum fields from the header-compressed packets arriving thereafter, which are not the IR packet (step 1315). In step 1320, the UDP checksum deletion block of the transmitter side transmits the packet, from which the UDP checksum field has been deleted, to the link/physical layer, so that the packet can be transmitted to the receiver side.

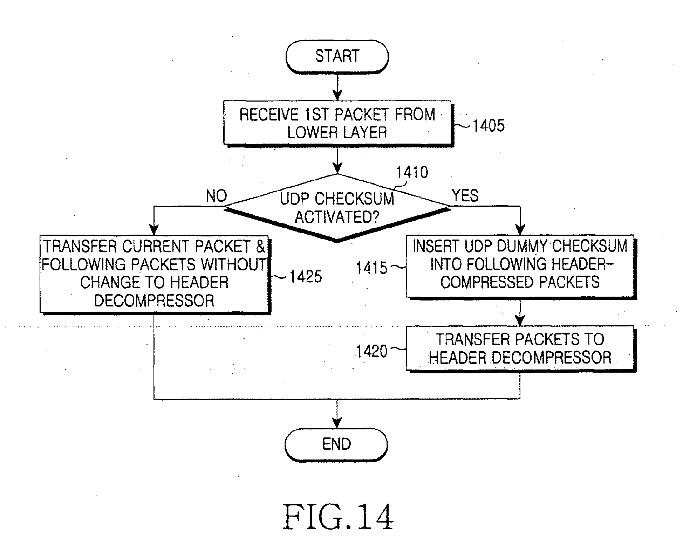

FIG. 14 is a flowchart of a dummy UDP checksum insertion operation of the receiver side according to an exemplary embodiment of the present invention.

Referring to FIG. 14, after setup of a call, the dummy UDP checksum insertion block of the receiver side receives the first packet from a lower layer (step 1405).

In step 1410, the dummy UDP checksum insertion block of the receiver side checks if the UDP checksum of the received packet has been activated. When the UDP checksum field of the packet has a value of "0000 0000 0000 0000", it implies that the UDP checksum has not been activated, and step 1425 is then performed. In contrast, when the UDP checksum field of the packet does not have the value of "0000 0000 0000 0000", it implies that the UDP checksum has been activated, and step 1415 is then performed.

In step 1425, the UE transmits the packet and packets arriving thereafter as they are to the header decompressor. This is because the UDP checksum activation/deactivation statuses of the packets belonging to the same IP flow are always the same. That is, when the UDP checksum of the first packet has been deactivated, the UDP checksums of the packets received thereafter are also deactivated. Since the deactivated UDP checksum is compressed to 0 bytes (that is, it is deleted) by the header compressor, the dummy UDP checksum insertion block need not perform a special operation for the deactivated UDP checksum.

In contrast, when the UDP checksum of the packet has been activated, the dummy UDP checksum insertion block of the receiver side inserts dummy UDP checksums into the header-compressed packets arriving thereafter, which are not the IR packet (step 1415). In step 1420, the dummy UDP checksum insertion block of the receiver side transmits the packet, in which the dummy UDP checksum has been inserted, to the header decompressor. In contrast, the dummy UDP checksum insertion block transmits the IR packet as it is to the header decompressor.

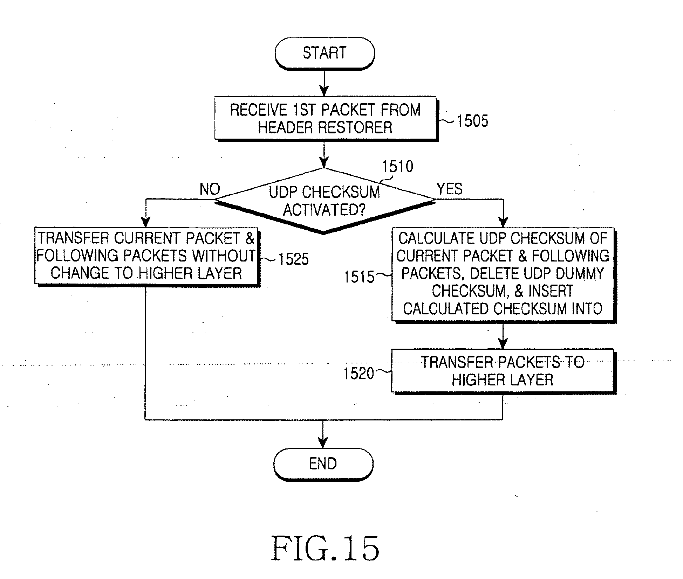

FIG. 15 is a flowchart of a dummy UDP checksum calculation operation of the receiver side according to an exemplary embodiment of the present invention.

Referring to FIG. 15, after setup of a call, the UDP checksum calculation block of the receiver side receives the first packet from the header decompressor (step 1505).

In step 1510, the UDP checksum calculation block of the receiver side checks if the UDP checksum of the received packet has been activated. When the UDP checksum field of the packet has a value of "0000 0000 0000 0000", it implies that the UDP checksum has not been activated, and step 1525 is then performed. In contrast, when the UDP checksum field of the packet does not have the value of "0000 0000 0000 0000", it implies that the UDP checksum has been activated, and step 1515 is then performed.

In step 1525, the UE transmits the packet and packets arriving thereafter to the header decompressor without changing the packets. This is because the UDP checksum activation/deactivation statuses of the packets belonging to the same IP flow are always the same. That is, when the UDP checksum of the first packet has been deactivated, the UDP checksums of the packets received thereafter are also deactivated. Since the deactivated UDP checksum is compressed to 0 bytes (that is, it is deleted) by the header compressor, the UDP checksum calculation block need not perform a special operation for the deactivated UDP checksum.

In contrast, when the UDP checksum of the packet has been activated, the UDP checksum calculation block of the receiver side calculates a UDP checksum of each of the header-compressed packets received thereafter and swaps the dummy UDP checksum of the header-compressed packets by the newly calculated UDP checksum values (step 1515). In step 1520, the UDP checksum calculation block of the receiver side transmits the packet, in which the UDP checksum has been decompressed, to the higher layer.

According to an exemplary embodiment of the present invention described below, a UDP checksum field of a packet having an activated UDP checksum is deactivated, headers of the packet are compressed, and the receiver side then calculates the UDP checksum field of the header-decompressed packet. According to the fourth embodiment of the present invention, the operations of deleting or inserting the dummy checksum are unnecessary, so it is possible to simplify the apparatuses of the transmitter side and the receiver side.

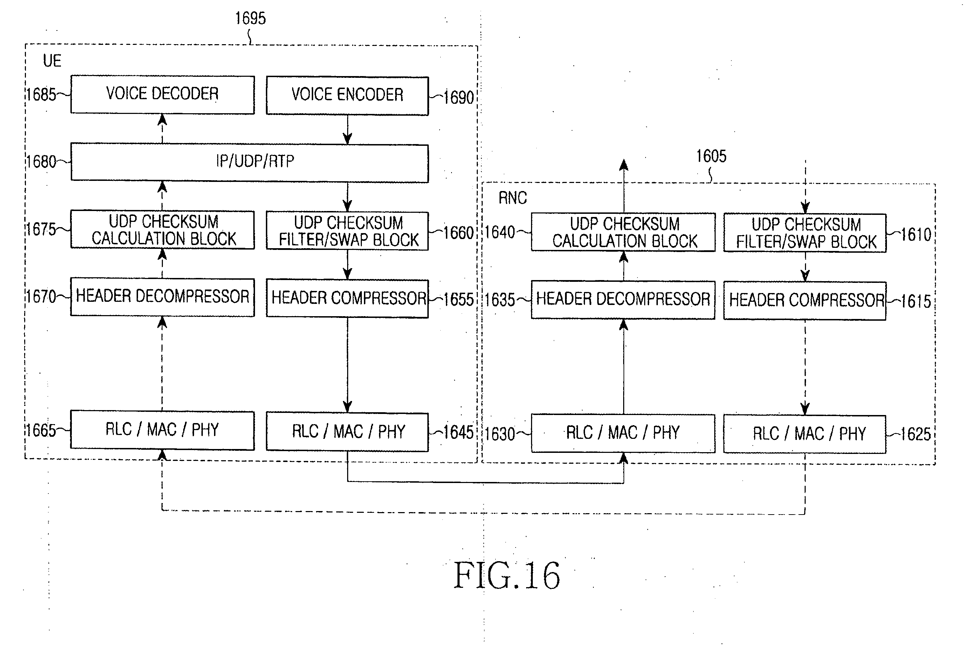

FIG. 16 is a block diagram illustrating a UE and an RNC according to an exemplary embodiment of the present invention.

Referring to FIG. 16, the UE 1695 and the RNC 1605 includes a UDP checksum filter/swap block 1610 or 1660 and a header compressor 1615 or 1655, in order to perform the transmission operation. Further, the UE 1695 and the RNC 1605 includes a UDP checksum calculation block 1640 or 1675 and a header decompressor 1635 or 1670, in order to perform the reception operation. For example, in an uplink service, the UE 1695 performs a transmission operation and the RNC 1605 performs a reception operation. In contrast, in a downlink service, the UE 1695 performs a reception operation and the RNC 1605 performs a transmission operation. The UE 1695 and the RNC 1605 include RLC/MAC/PHY layers 1625, 1630, 1645, and 1665, in order to perform UMTS transmission and reception.

A voice encoder 1690 and a voice decoder 1685, included in the UE 1695, encode voice signals of a user into voice data and decode voice data into voice signals, respectively. The IP/UDP/RTP layer 1680 of the UE 1695 packetizes data of a higher layer (that is, the voice data) into IP/UDP/RTP packets or demultiplexes the IP/UDP/RTP packets and transmits the demultiplexed data to the voice decoder 1690 which is a higher layer.

Upon receiving a VoIP packet for a predetermined IP flow from another node or a higher layer, the UDP checksum filter/swap block 1610 or 1660 of the transmitter side checks a UDP checksum of the VoIP packet in order to determine if the packet has an error. When the packet has no error, the UDP checksum filter/swap block converts the UDP checksum value included in the VoIP packet to "0000 0000 0000 0000" and transmits the converted packet to the header compressor 1615 or 1655. Then, the header compressor 1615 or 1655 determines that the UDP checksum of the VoIP packet has been deactivated and deletes the UDP checksum during the header compression. Therefore, it is unnecessary to connect a UDP checksum deletion block to a lower side of the header compressor 1615 or 1655.

The header-compressed packet from the header compressor 1615 or 1655 is transmitted through a wireless channel to the receiver side. Then, the header decompressor 1635 or 1670 of the receiver side decompresses the headers, reconstructs a packet having a UDP checksum set to "0000 0000 0000 0000", and then transmits the packet to the UDP checksum calculation block 1640 or 1675. The UDP checksum calculation block 1640 or 1675 decompresses the original UDP checksum value by performing a UDP checksum operation for the received packet, decompresses the original packet by swapping the UDP checksum field value by the decompressed UDP checksum value, and then transmits the decompressed packet to a higher layer.

According to an exemplary embodiment of the present invention as described above, the UDP checksum value is not transmitted through a wireless channel to save the radio resources.

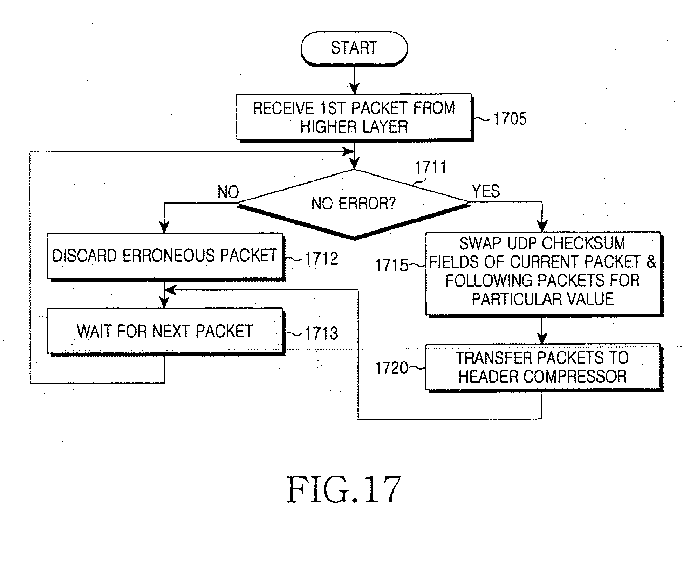

FIG. 17 is a flowchart of a UDP checksum filter/swap operation of the transmitter side according to an exemplary embodiment of the present invention.

Referring to FIG. 17, after setup of a call, the UDP checksum filter/swap block of the transmitter side receives the first VoIP including the IP/UDP/RTP headers constructed in the higher layer (step 1705).

In step 1711, the UDP checksum filter/swap block checks the UDP checksum of the VoIP packet in order to determine if the VoIP packet has an error. Then, the UDP checksum filter/swap block proceeds to step 1712 when the VoIP packet has an error and proceeds to step 1715 when the VoIP packet does not have an error.

After confirming that the VoIP packet has no error, the UDP checksum filter/swap block of the transmitter side swaps the UDP checksum field of the VoIP packet for a particular value, that is, "0000 0000 0000 0000" (step 1715). In other words, the UDP checksum filter/swap block deactivates the UDP checksum of the VoIP packet so that the header compressor deletes the UDP checksum field of the VoIP packet during the header compression. When the UDP checksum field of the VoIP packet already has the value of "0000 0000 0000 0000", the UDP checksum filter/swap block proceeds directly to step 1720. In step 1720, the UDP checksum filter/swap block of the transmitter side transmits the packets having a deactivated UDP checksum field to the header compressor and proceeds to step 1713.

In step 1712, the UDP checksum filter/swap block of the transmitter side discards the VoIP packet having an error and proceeds to step 1713. In step 1713, the UDP checksum filter/swap block of the transmitter side waits for the arrival of the next packet. When the next packet arrives, the UDP checksum filter/swap block returns to step 1711 in order to determine if the next packet has an error.

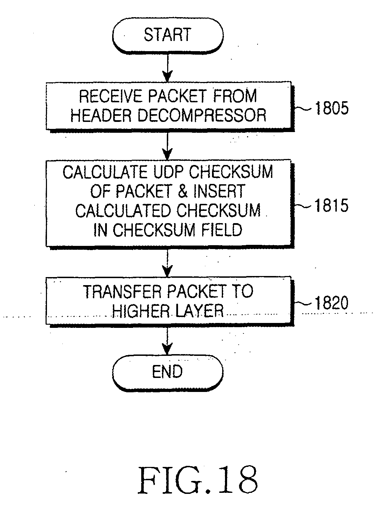

FIG. 18 is a flowchart of a UDP checksum decompression operation of the receiver side according to an exemplary embodiment of the present invention.

Referring to FIG. 18, after setup of a call, the UDP checksum calculation block of the receiver side receives the first VoIP packet from the header decompressor (step 1805). Then, in step 1815, the UDP checksum calculation block of the receiver side calculates a UDP checksum value for the VoIP packet by using a predetermined UDP checksum calculation algorithm, and inserts the calculated UDP checksum value into the UDP checksum field of the VoIP packet. In step 1820, the VoIP packet including the calculated UDP checksum value is transmitted to a higher layer.

Representative effects obtained by the exemplary embodiments of the present invention as described above include the following.

First, the transmitter side need not transmit the UDP checksum field through a wireless channel. Therefore, the exemplary embodiments of the present invention can save the radio resources. Further, according to the exemplary embodiments of the present invention, the transmitter side or the receiver side may either use a dummy UDP checksum field value or deactivate the UDP checksum field to prevent transmission of the UDP checksum field, thereby saving the transmission resources.

While the invention has been shown and described with reference to certain exemplary embodiments thereof, it will be understood by those skilled in the art that various changes in form and details may be made therein without departing from the scope of the invention as defined by the appended claims.

## Claims

1. A method for transmitting a voice packet through a radio link for a mobile communication system providing a voice service through a packet network inter-working with the internet, the method comprising:
receiving (605, 805) a Voice over internet Protocol, VolP, packet, wherein the VolP packet comprises a header including a plurality of header fields and a User Datagram Protocol, UDP, checksum;
verifying the VolP packet by using the UDP checksum, to determine if the VolP packet comprises an error;
compressing (615) the header fields of the header to form a compressed header and to construct a header-compressed packet including the compressed header, the UDP checksum and a Cyclic Redundancy Check, CRC, code calculated for the header fields when the VoIP packet does not comprise an error;
deleting (620, 820) the UDP checksum from the header-compressed packet to construct a header-compressed packet from which the UDP checksum has been deleted; and
transmitting (625, 825) the header-compressed packet without the UDP checksum through a wireless channel.

2. The method as claimed in claim 1, wherein the header-compressed packet comprises the CRC code, a serial number of the VolP packet, and fields necessary for decompression of the header fields except for the UDP checksum.

3. The method as claimed in claim 1, further comprising discarding the VolP packet without compressing the VolP packet, when the VolP packet comprises an error.

4. An apparatus for transmitting a voice packet through a radio link for a mobile communication system providing a voice service through a packet network inter-working with the internet, the apparatus comprising:
a higher layer means for generating a Voice over internet Protocol, VolP, packet, wherein the VolP packet comprises a header including a plurality of header fields and a User Datagram Protocol, UDP, checksum;
a UDP checksum filter (310, 510) for verifying the VolP packet by using the UDP checksum, to determine if the VolP packet comprises an error;
a header compressor (320) for compressing the header fields of the header to form a compressed header and for constructing a header-compressed packet including the compressed header, the UDP checksum and a Cyclic Redundancy Check, CRC, code calculated for the header fields when the VolP packet does not comprise an error;
a UDP checksum deletion block (330, 520) for deleting the UDP checksum from the header-compressed packet to construct a header-compressed packet from which the UDP checksum has been deleted; and
a lower layer means (340, 525) for transmitting the header-compressed packet without the UDP checksum through a wireless channel.

5. The apparatus as claimed in claim 4, wherein the header-compressed packet comprises the CRC code, a serial number of the VolP packet, and fields necessary for decompression of the header fields except for the UDP checksum.

6. The apparatus as claimed in claim 4, wherein the UDP checksum filter (310, 510) is adapted to discard the VolP packet without transmitting the VolP packet to the - header compressor, when the VolP packet comprises an error.

7. A method for receiving a Voice over Internet Protocol, VolP, packet through a radio link for a mobile communication system providing a voice service through a packet network inter-working with the Internet, the method comprising:
receiving (705, 905) a header-compressed packet comprising a compressed header through the radio link, wherein the compressed header does not include a User Datagram Protocol, UDP, checksum, wherein the header-compressed packet includes a Cyclic Redundancy Check, CRC, code;
decompressing (710) the compressed header of the header-compressed packet to construct a header-decompressed packet which includes a decompressed header comprising a plurality of header fields
;
verifying (715) the decompressed header of the header-decompressed packet by using a CRC code calculated for the header fields ;
calculating (720) a UDP checksum of the header-decompressed packet when the decompressed header does not comprise an error; and
inserting (720) the calculated UDP checksum into the decompressed header of the header-decompressed packet to recover the VolP packet.

8. The method as claimed in claim 7, wherein the header-compressed packet comprises the CRC code, a serial number of the VolP packet, and fields necessary for decompression of the header fields except for the UDP checksum.

9. The method as claimed in claim 8, wherein, in the verifying of the decompressed header, a determination is made that the decompressed header do not comprise an error, when the CRC code calculated for the decompressed header is equal to the CRC code included in the compressed header.

10. An apparatus for receiving a Voice over Internet Protocol, VolP, packet through a radio link for a mobile communication system providing a voice service through a packet network inter-working with the Internet, the apparatus comprising:
a lower layer means (350, 565) for receiving a header-compressed packet comprising a compressed header through the radio link, wherein the compressed header does not include a User Datagram Protocol, UDP, checksum, wherein the header-compressed packet does include a Cyclic Redundancy Check, CRC, code;
a header decompressor (360) for decompressing the compressed header of the header-compressed packet to construct a header-decompressed packet which includes a decompressed header comprising a plurality of header fields and then verifying the decompressed header of the header-decompressed packet by using a CRC code calculated for the header fields
; and
a UDP checksum calculation block (370, 575) for calculating a UDP checksum of the header-decompressed packet when the decompressed header does not comprise an error, and inserting the calculated UDP checksum into the decompressed header of the header-decompressed packet to recover the VoIP packet.

11. The apparatus as claimed in claim 10, wherein the header-compressed packet comprises the CRC code, a serial number of the VoIP packet, and fields necessary for decompression of the header fields except for the UDP checksum.

12. The apparatus as claimed in claim 11, wherein the header decompressor (360) is adapted to determine that the decompressed header of the header-decompressed packet do not comprise an error, when the CRC code calculated for the decompressed header is equal to the CRC code included in the compressed header.

## Patentansprüche

1. Verfahren zum Senden eines Sprach-Paketes über eine Funkverbindung für ein Mobilkommunikationssystem, das einen Sprach-Dienst über Paket-Netzwerk-Interworking mit dem Internet bereitstellt, wobei das Verfahren umfasst:
Empfangen (605, 805) eines VolP-Paketes (Voice over Internet Protocol packet), wobei das VolP-Paket einen Header umfasst, der eine Vielzahl von Header-Feldern und eine UDP-Prüfsumme (User Datagram Protocol checksum) enthält;
Verifizieren des VolP-Paketes unter Verwendung der UDP-Prüfsumme, um festzustellen, ob das VoIP-Paket einen Fehler umfasst;
Komprimieren (615) der Header-Felder des Headers, um einen komprimierten Header auszubilden und ein Paket mit komprimiertem Header zu erstellen, das den komprimierten Header, die UDP-Prüfsumme sowie einen CRC-Code (Cyclic Redundancy Check code) enthält, der für die Header-Felder berechnet wird, wenn das VoIP-Paket keinen Fehler umfasst;
Löschen (620, 820) der UDP-Prüfsumme aus dem Paket mit komprimiertem Header, um ein Paket mit komprimiertem Header zu erstellen, aus dem die UDP-Prüfsumme gelöscht worden ist; und
Senden (625, 825) des Paketes mit komprimiertem Header ohne die UDP-Prüfsumme über einen Drahtlos-Kanal.

2. Verfahren nach Anspruch 1, wobei das Paket mit komprimiertem Header den CRC-Code, eine Seriennummer des VolP-Paketes und Felder umfasst, die für Dekomprimierung der Header-Felder mit Ausnahme der UDP-Prüfsumme erforderlich sind.

3. Verfahren nach Anspruch 1, das des Weiteren umfasst, dass das VoIP-Paket verworfen wird, ohne das VoIP-Paket zu komprimieren, wenn das VolP-Paket einen Fehler umfasst.

4. Vorrichtung zum Senden eines Sprach-Paketes über eine Funkverbindung für ein Mobilkommunikationssystem, das einen Sprach-Dienst über Paket-Netzwerk-Interworking mit dem Internet bereitstellt, wobei die Vorrichtung umfasst:
eine Einrichtung einer höheren Schicht zum Erzeugen eines VolP-Paketes (Voice over Internet Protocol packet), wobei das VolP-Paket einen Header umfasst, der eine Vielzahl
von Header-Feldern und eine UDP-Prüfsumme (User Datagram Protocol checksum) enthält;
ein UDP-Prüfsummen-Filter (310, 510), mit dem das VolP-Paket unter Verwendung der UDP-Prüfsumme verifiziert wird, um festzustellen, ob das VolP-Paket einen Fehler umfasst;
eine Header-Komprimierungseinrichtung (320), mit der die Header-Felder des Headers komprimiert werden, um einen komprimierten Header auszubilden, und mit der ein Paket mit komprimiertem Header bestimmt wird, das den komprimierten Header, die UDP-Prüfsumme sowie einen CRC-Code (Cyclic Redundancy Check code) enthält, der für die Header-Felder berechnet wird, wenn das VolP-Paket keinen Fehler umfasst;
einen Block (330, 520) zum Löschen der UDP-Prüfsumme, mit dem die UDP-Prüfsumme aus dem Paket mit komprimiertem Header gelöscht wird, um ein Paket mit komprimiertem Header zu erstellen, aus dem die UDP-Prüfsumme gelöscht worden ist; und
eine Einrichtung (340, 525) einer unteren Schicht zum Senden des Paketes mit komprimiertem Header ohne die UDP-Prüfsumme über einen Drahtlos-Kanal.

5. Vorrichtung nach Anspruch 4, wobei das Paket mit komprimiertem Header den CRC-Code, eine Seriennummer des VoIP-Paketes und Felder umfasst, die für Dekomprimierung der Header-Felder mit Ausnahme der UDP-Prüfsumme erforderlich sind.

6. Vorrichtung nach Anspruch 4, wobei das UDP-Prüfsummen-Filter (310, 510) so eingerichtet ist, dass es das VoIP-Paket verwirft, ohne das VolP-Paket zu der Header-Komprimierungseinrichtung zu senden, wenn das VoIP-Paket einen Fehler umfasst.

7. Verfahren zum Empfangen eines VolP-Paketes (Voice over Internet Protocol packet) über eine Funkverbindung für ein Mobilkommunikationssystem, das einen Sprach-Dienst über Paket-Netzwerk-Interworking mit dem Internet bereitstellt, wobei das Verfahren umfasst:
Empfangen (705, 905) eines Paketes mit komprimiertem Header, das einen komprimierten Header umfasst, über die Funkverbindung, wobei der komprimierte Header keine UDP-Prüfsumme (User Datagram Protocol checksum) enthält und das Paket mit komprimiertem Header einen CRC-Code (Cyclic Redundancy Check code) enthält;
Dekomprimieren (710) des komprimierten Headers des Paketes mit komprimiertem Header, um ein Paket mit dekomprimiertem Header zu erstellen, das einen dekomprimierten Header enthält, der eine Vielzahl von Header-Feldern umfasst;
Verifizieren (715) des dekompromierten Headers des Paketes mit dekomprimiertem Header unter Verwendung eines für die Header-Felder berechneten CRC-Codes;
Berechnen (720) einer UDP-Prüfsumme des Paketes mit dekomprimiertem Header, wenn der dekomprimierte Header keinen Fehler umfasst; und
Einsetzen (720) der berechneten UDP-Prüfsumme in den dekomprimierten Header des Paketes mit dekomprimiertem Header, um das VoIP-Paket wiederzugewinnen.

8. Verfahren nach Anspruch 7, wobei das Paket mit komprimiertem Header den CRC-Code, eine Seriennummer des VolP-Paketes und Felder umfasst, die für Dekomprimierung der Header-Felder mit Ausnahme der UDP-Prüfsumme erforderlich sind.

9. Verfahren nach Anspruch 8, wobei beim Verifizieren des dekompromierten Headers eine Feststellung dahingehend getroffen wird, dass der dekomprimierte Header keinen Fehler umfasst, wenn der für den dekomprimierten Header berechnete CRC-Code dem in dem komprimierten Header enthaltenen CRC-Code gleich ist.

10. Vorrichtung zum Empfangen eines VolP-Paketes (Voice over Internet Protocol packet) über eine Funkverbindung für ein Mobilkommunikationssystem, das einen Sprach-Dienst über Paket-Netzwerk-Interworking mit dem Internet bereitstellt, wobei die Vorrichtung umfasst:
eine Einrichtung (350, 565) zum Empfangen eines Paketes mit komprimiertem Header, das einen komprimierten Header umfasst, über die Funkverbindung, wobei der komprimierte Header keine UDP-Prüfsumme (User Datagram Protocol checksum) enthält und das Paket mit komprimiertem Header einen CRC-Code (Cyclic Redundancy Check code) enthält;
eine Header-Dekomprimiereinrichtung (360), mit der der komprimierte Header des Paketes mit komprimiertem Header dekomprimiert wird, um ein Paket mit dekomprimiertem Header zu erstellen, das einen dekomprimierten Header enthält, der eine Vielzahl von Header-Feldern umfasst, und anschließend der dekomprimierte Header des Paketes mit dekomprimiertem Header unter Verwendung eines für die Header-Felder berechneten CRC-Codes verifiziert wird; und
einen Block (370, 575) zum Berechnen einer UDP-Prüfsumme, mit dem eine UDP-Prüfsumme des Paketes mit dekomprimiertem Header berechnet wird, wenn der dekomprimierte Header keinen Fehler umfasst, und die berechnete UDP-Prüfsumme in den dekomprimierten Header des Paketes mit dekomprimiertem Header eingefügt wird, um das VoIP-Paket wiederzugewinnen.

11. Vorrichtung nach Anspruch 10, wobei das Paket mit komprimiertem Header den CRC-Code, eine Seriennummer des VoIP-Paketes und Felder umfasst, die für Dekomprimierung der Header-Felder mit Ausnahme der UDP-Prüfsumme erforderlich sind.

12. Vorrichtung nach Anspruch 11, wobei die Header-Dekomprimiereinrichtung (360) so eingerichtet ist, dass sie feststellt, dass der dekomprimierte Header des Paketes mit dekomprimiertem Header keinen Fehler umfasst, wenn der für den dekomprimierten Header berechnete CRC-Code dem in dem komprimierten Header enthaltenen CRC-Code gleich ist.

## Revendications

1. Procédé permettant de transmettre un paquet vocal par l'intermédiaire d'une liaison radio pour un système de communication mobile fournissant un service vocal au travers d'un réseau par paquets interagissant avec le réseau Internet, le procédé comprenant :
la réception (605, 805) d'un paquet vocal au protocole Internet, VoIP, dans lequel le paquet VoIP comprend un en-tête incluant une pluralité de champs d'en-tête et une somme de contrôle au protocole de datagramme utilisateur, UDP,
la vérification du paquet VoIP en utilisant la somme de contrôle au protocole UDP afin de déterminer si le paquet VoIP comporte une erreur,
la compression (615) des champs d'en-tête de l'en-tête afin de former un en-tête compressé et de constituer un paquet à en-tête compressé incluant l'en-tête compressé, la somme de contrôle au protocole UDP et un code de contrôle par redondance cyclique, CRC, calculé pour les champs d'en-tête lorsque le paquet VoIP ne comporte pas d'erreur,
la suppression (620, 820) de la somme de contrôle au protocole UDP dans le but de constituer un paquet à en-tête compressé à partir duquel la somme de contrôle au protocole UDP a été supprimée, et
la transmission (625, 825) du paquet à en-tête compressé sans la somme de contrôle au protocole UDP par l'intermédiaire d'un canal sans fil.

2. Procédé selon la revendication 1, dans lequel le paquet à en-tête compressé comprend le code de contrôle CRC, le numéro de série du paquet VoIP et des champs nécessaires à la décompression des champs d'en-tête à l'exception de la somme de contrôle au protocole UDP.

3. Procédé selon la revendication 1, comprenant en outre le rejet du paquet VoIP sans compresser le paquet VoIP lorsque le paquet VoIP comporte une erreur.

4. Appareil permettant de transmettre un paquet vocal par l'intermédiaire d'une liaison radio pour un système de communication mobile fournissant un service vocal au travers d'un réseau par paquets interagissant avec le réseau Internet, l'appareil comprenant :
un moyen formant couche supérieure permettant de générer un paquet vocal au protocole Internet, VoIP, dans lequel le paquet VoIP comprend un en-tête incluant une pluralité de champs d'en-tête et une somme de contrôle au protocole de datagramme utilisateur, UDP,
un filtre de somme de contrôle au protocole UDP (310, 510) permettant de vérifier le paquet VoIP en utilisant la somme de contrôle au protocole UDP afin de déterminer si le paquet VoIP comporte une erreur,
un dispositif de compression d'en-tête (320) permettant de compresser les champs d'en-tête de l'en-tête afin de former un en-tête compressé et dans le but de constituer un paquet à en-tête compressé incluant l'en-tête compressé, la somme de contrôle au protocole UDP et un code de contrôle de redondance cyclique, CRC, calculé pour les champs d'en-tête lorsque le paquet VoIP ne comporte pas d'erreur,
un bloc de suppression de somme de contrôle au protocole UDP (330, 520) permettant de supprimer la somme de contrôle au protocole UDP du paquet à en-tête compressé dans le but de constituer un paquet à en-tête compressé à partir duquel la somme de contrôle au protocole UDP a été supprimée, et
un moyen formant couche inférieure (340, 525) permettant de transmettre le paquet à en-tête compressé sans la somme de contrôle au protocole UDP par l'intermédiaire d'un canal sans fil.

5. Appareil selon la revendication 4, dans lequel le paquet à en-tête compressé comprend le code de contrôle CRC, le numéro de série du paquet VoIP et des champs nécessaires à la décompression des champs d'en-tête à l'exception de la somme de contrôle au protocole UDP.

6. Appareil selon la revendication 4, dans lequel le filtre de somme de contrôle au protocole UDP (310, 510) est conçu pour rejeter le paquet VoIP sans transmettre le paquet VoIP au dispositif de compression d'en-tête lorsque le paquet VoIP comporte une erreur.

7. Procédé permettant de recevoir un paquet vocal par l'intermédiaire d'une liaison radio pour un système de communication mobile fournissant un service vocal au travers d'un réseau par paquets interagissant avec le réseau Internet, le procédé comprenant :
la réception (705, 905) d'un paquet à en-tête compressé comprenant un en-tête compressé par l'intermédiaire de la liaison radio, l'en-tête compressé n'incluant pas de somme de contrôle au protocole de datagramme utilisateur, UDP, le paquet à en-tête compressé incluant un code de contrôle de redondance cyclique, CRC,
la décompression (710) de l'en-tête compressé du paquet à en-tête compressé dans le but de constituer un paquet à en-tête décompressé qui inclut un en-tête décompressé comprenant une pluralité de champs d'en-tête,
la vérification (715) de l'en-tête décompressé du paquet à en-tête décompressé en utilisant un code de contrôle CRC calculé pour les champs d'en-tête,
le calcul (720) d'une somme de contrôle au protocole UDP du paquet à en-tête décompressé lorsque l'en-tête décompressé ne comporte pas d'erreur, et
l'insertion (720) de la somme de contrôle au protocole UDP calculée dans l'en-tête décompressé du paquet à en-tête décompressé afin de récupérer le paquet VoIP.

8. Procédé selon la revendication 7, dans lequel le paquet à en-tête compressé comprend le code de contrôle CRC, le numéro de série du paquet VoIP et des champs nécessaires à la décompression des champs d'en-tête à l'exception de la somme de contrôle au protocole UDP.

9. Procédé selon la revendication 8, dans lequel, dans la vérification de l'en-tête décompressé, il est effectué une détermination de ce que l'en-tête décompressé ne comporte pas d'erreur lorsque le code de contrôle CRC calculé pour l'en-tête décompressé est égal au code de contrôle CRC inclus dans l'en-tête compressé.

10. Appareil permettant de recevoir un paquet vocal au protocole Internet, VoIP, par l'intermédiaire d'une liaison radio pour un système de communication mobile fournissant un service vocal au travers d'un réseau par paquets interagissant avec le réseau Internet, l'appareil comprenant :
un moyen formant couche inférieure (350, 565) permettant de recevoir un paquet à en-tête compressé comprenant un en-tête compressé par l'intermédiaire de la liaison radio, dans lequel l'en-tête compressé n'inclut pas de somme de
contrôle au protocole de datagramme utilisateur, UDP, dans lequel le paquet à en-tête compressé inclut un code de contrôle de redondance cyclique, CRC,
un dispositif de décompression d'en-tête (360) permettant de décompresser l'en-tête compressé du paquet à en-tête compressé dans le but de constituer un paquet à en-tête décompressé qui inclut un en-tête décompressé comprenant une pluralité de champs d'en-tête, puis de vérifier l'en-tête décompressé du paquet à en-tête décompressé en utilisant un code de contrôle CRC calculé pour les champs d'en-tête, et
un bloc de calcul de somme de contrôle au protocole UDP (370, 575) permettant de calculer la somme de contrôle au protocole UDP du paquet à en-tête décompressé lorsque l'en-tête décompressé ne comporte pas d'erreur, et d'insérer la somme de contrôle au protocole UDP dans l'en-tête décompressé du paquet à en-tête décompressé afin de récupérer le paquet VoIP.

11. Appareil selon la revendication 10, dans lequel le paquet à en-tête compressé comprend le code de contrôle CRC, le numéro de série du paquet VoIP et des champs nécessaires à la décompression des champs d'en-tête à l'exception de la somme de contrôle au protocole UDP.

12. Appareil selon la revendication 11, dans lequel le dispositif de décompression d'en-tête (360) est conçu pour déterminer que l'en-tête décompressé du paquet à en-tête décompressé ne comporte pas d'erreur lorsque le code de contrôle CRC calculé pour l'en-tête décompressé est égal au code de contrôle CRC inclus dans l'en-tête compressé.
